# EUROPÄISCHE PATENTANMELDUNG

(11) **EP 3 725 572 A1**
(43) Veröffentlichungstag der Anmeldung: **21.10.2020**
(21) Anmeldenummer: 20165016.5
(22) Anmeldetag: 23.03.2020
(51) Int. Cl.: B60D 1/06, B60D 1/07, B60R 9/06

(54) **LASTENTRÄGER**

(30) Priorität: 25.03.2019 DE 102019107527
(71) Anmelder: ACPS Automotive GmbH, 71706 Markgröningen (DE)
(72) Erfinder: Neumann, Peter, 71720 Oberstenfeld (DE); Gassebner, Martin, 70806 Kornwestheim (DE)
(74) Vertreter: Hoeger, Stellrecht & Partner Patentanwälte mbB

(57) **Zusammenfassung**

Lastenträger (40) für einen Kugelhals (12) und eine von dem Kugelhals (12) getragene Kupplungskugel (26) aufweisende Anhängekupplungen (10) für Kraftfahrzeuge, umfassend eine Montageeinheit (50), die eine auf die Kupplungskugel (26) aufsetzbare Kupplungskugelaufnahme (104) und eine der Kupplungskugelaufnahme (104) zugeordnete Haltevorrichtung (130) aufweist, welche bei auf die Kupplungskugel (26) aufgesetzter und somit in einer Fixierposition stehender Kupplungskugelaufnahme (104) die Kupplungskugelaufnahme (104) mit der Kupplungskugel (26) verbindet, und mindestens eine mit der Montageeinheit (50) verbundene Positionierkörperaufnahme (122), welche bei auf die Kupplungskugel (26) aufgesetzter Kupplungskugelaufnahme (104) zur kippsicheren und Kippmomente aufnehmenden Abstützung der Montageeinheit (50) an dem Kugelhals (10) mit mindestens einem am Kugelhals (10) fest angeordneten Positionierkörper (54) in Wirkverbindung bringbar ist, dadurch gekennzeichnet , dass die Haltevorrichtunc (130) in eine Spannstellung überführbar ist, in welcher die Kupplungskugelaufnahme (104) mit der Haltevorrichtung (130) an der Kupplungskugel (26) derart kraftschlüssig festgelegt ist, dass die Montageeinheit (50) den Lastenträger (40) allein durch den Kraftschluss an der Kupplungskugel (26) kippfrei fixiert.

## Beschreibung

Die Erfindung betrifft einen Lastenträger für einen Kugelhals und eine von dem Kugelhals getragene Kupplungskugel aufweisende Anhängekupplungen für Kraftfahrzeuge, umfassend eine Montageeinheit, die eine auf die Kupplungskugel aufsetzbare Kupplungskugelaufnahme und eine der Kupplungskugelaufnahme zugeordnete Haltevorrichtung aufweist, welche bei auf die Kupplungskugel aufgesetzter und somit in einer Fixierposition stehender Kupplungskugelaufnahme die Kupplungskugelaufnahme mit der Kupplungskugel verbindet, und mindestens eine mit der Montageeinheit verbundene Positionierkörperaufnahme, welche bei auf die Kupplungskugel auf gesetzter Kupplungskugelaufnahme zur kippsicheren und Kippmomente aufnehmenden Abstützung der Montageeinheit an dem Kugelhals mit mindestens einem am Kugelhals fest angeordneten Positionierkörper in Wirkverbindung bringbar ist.

Derartige Lastenträger sind aus dem Stand der Technik, beispielsweise der DE 10 2014 109 134 A1, bekannt.

Bei diesen Lastenträgern besteht das Problem, dass diese lediglich dann einsetzbar sind, wenn an dem Kugelhals der mindestens eine Positionierkörper angeordnet ist, da das Zusammenwirken des Positionierkörpers mit der mindestens einen und die Kippmomente aufnehmenden Positionierkörperaufnahme der Montageeinheit zu einer kippfesten Abstützung der Montageeinheit an der Anhängekupplung führt.

Ist jedoch kein Positionierkörper vorhanden, ist die Montage eines derartigen Lastenträgers bei derartigen Anhängekupplungen ohne Positionierkörper nicht möglich.

Der Erfindung liegt daher die Aufgabe zugrunde, einen Lastenträger der gattungsgemäßen Art derart zu verbessern, dass dieser auch bei Anhängekupplungen ohne Positionierkörper einsetzbar ist.

Diese Aufgabe wird bei einem Lastenträger der eingangs beschriebenen Art erfindungsgemäß dadurch gelöst, dass die Haltevorrichtung in eine Spannstellung überführbar ist, in welcher die Kupplungskugelaufnahme mit der Haltevorrichtung an der Kupplungskugel derart kraftschlüssig festgelegt ist, dass die Montageeinheit den Lastenträger allein durch den Kraftschluss an der Kupplungskugel kippfrei fixiert.

Der Vorteil dieser Lösung ist darin zu sehen, dass durch die erfindungsgemäße Ausbildung der Haltevorrichtung die Möglichkeit besteht, einen derartigen Lastenträger sowohl bei Anhängekupplungen mit Positionierkörpern als auch bei Anhängekupplungen ohne derartige Positionierkörper einzusetzen.

Bei einem derartigen Lastenträger ist es besonders vorteilhaft, wenn die Haltevorrichtung so ausgebildet ist, dass diese beim Aufsetzen der Kupplungskugelaufnahme auf die Kupplungskugel selbsttätig in eine Haltestellung übergeht, in welche die Kupplungskugelaufnahme unlösbar, jedoch verkippbar mit der Kupplungskugel verbunden ist.

Eine derartige Haltestellung der Haltevorrichtung ermöglicht es, selbst dann, wenn die Anhängekupplung nicht mit Positionierkörpern versehen ist, den Lastenträger mit der Montageeinheit auf die Kupplungskugel der Anhängekupplung aufzusetzen und durch die Haltestellung vorläufig zu fixieren, so dass dann ausgehend von der Haltestellung ein Ausrichten des Lastenträgers möglich ist und ein Übergang in die Spannstellung erfolgen kann.

Desgleichen hat eine derartige Haltestellung der Haltevorrichtung bei Lastenträgern, die bei einer Anhängekupplung mit mindestens einem Positionierkörper eingesetzt werden, den Vorteil, dass damit bereits eine sichere Fixierung des Lastenträgers an der Anhängekupplung möglich ist, ohne dass es erforderlich ist, die Haltevorrichtung in die Spannstellung zu überführen.

Um beispielsweise ein Spiel zwischen der Montageeinheit und der Anhängekupplung zu vermeiden oder die Fixierung noch besser zu machen, kann die Haltevorrichtung in einem derartigen Fall in die Spannstellung überführt werden.

Hinsichtlich der Ausbildung der Haltevorrichtung wurden bislang keine näheren Angaben gemacht.

So sieht eine vorteilhafte Lösung vor, dass die Haltevorrichtung mindestens ein erstes und ein zweites Halteelement umfasst und dass die Halteelemente beim Aufsetzen der Kupplungskugelaufnahme auf die Kupplungskugel zwischen sich aufnehmen und sich dabei an der Kupplungskugel anlegen.

Das heißt, dass ein derart ausgebildeter Lastenträger mindestens zwei Halteelemente aufweist, es ist aber auch möglich, diesen so auszubilden, dass er weitere Halteelemente aufweist.

Wichtig ist dabei lediglich, dass die Kupplungskugelaufnahme in ihrer Fixierposition die Kupplungskugel zwischen den Halteelementen aufnimmt und sich die Halteelemente an der Kupplungskugel anlegen.

Besonders vorteilhaft ist es, wenn die Halteelemente in der Spannstellung die Kupplungskugel zwischen sich aufnehmen und zwischen sich kraftschlüssig einspannen.

Ferner ist es ebenfalls vorteilhaft, wenn die Halteelemente in der Haltestellung der Haltevorrichtung die Kupplungskugel zwischen sich aufnehmen und auf dieser gleitend anliegen.

Um die Haltevorrichtung mit den Halteelementen in die verschiedenen Stellungen bringen zu können, hat es sich als besonders vorteilhaft erwiesen, wenn die Haltevorrichtung eine mit den Halteelementen zusammenwirkende Positioniervorrichtung aufweist, mittels welcher die Halteelemente in der jeweiligen Stellung relativ zueinander positionierbar und fixierbar sind.

Eine derartige Positioniervorrichtung kann dabei in unterschiedlichster Art und Weise ausgebildet sein.

Eine erste Möglichkeit sieht vor, dass die Positioniervorrichtung so ausgebildet ist, dass die Halteelemente mit dieser vor dem Aufsetzen der Kupplungskugelaufnahme in einer Bereitschaftsstellung positionierbar sind.

Eine derartige Bereitschaftsstellung der Halteelemente schafft die Möglichkeit, die Kupplungskugelaufnahme mitsamt den Halteelementen in einfacher Weise auf die Kupplungskugel aufzusetzen.

Besonders vorteilhaft ist es dabei, wenn die Positioniervorrichtung ein federelastisches Element umfasst, welches durch Einwirken auf die Positioniervorrichtung diese in der Bereitschaftsstellung hält.

Ferner sieht eine vorteilhafte Lösung vor, dass das Anlegen der Halteelemente an der Kupplungskugel beim Aufsetzen der Kupplungskugelaufnahme auf die Kupplungskugel ein Aufheben der Bereitschaftsstellung erfolgt.

Das heißt, dass die Halteelemente vor dem Aufsetzen der Haltevorrichtung auf die Kupplungskugel in eine Bereitschaftsstellung gebracht werden, diese Bereitschaftsstellung aber dann beim Aufsetzen der Halteelemente auf die Kupplungskugel und insbesondere der Berührung der Halteelemente mit der Kupplungskugel aufgehoben wird und somit die Halteelemente nicht mehr in der Bereitschaftsstellung stehen.

Das Aufheben der Bereitschaftsstellung könnte dabei in unterschiedlichster Art und Weise erfolgen, beispielsweise dadurch, dass ein Tastelement der Positioniervorrichtung mit der Kupplungskugel in Berührung kommt.

Besonders günstig ist es jedoch, dass das Aufheben der Bereitschaftsstellung dadurch erfolgt, dass die Halteelemente bei Kontakt mit der Kupplungskugel von einander weg, das heißt auseinander, bewegt werden, nämlich dadurch, dass die Kupplungskugel bei diesem Vorgang zwischen die Halteelemente bewegt wird.

Eine zweckmäßige Lösung hierzu sieht vor, dass die Positioniervorrichtung so ausgebildet ist, dass durch das Aufheben der Bereitschaftsstellung beim Aufsetzen der Kupplungskugelaufnahme auf die Kupplungskugel die Positioniervorrichtung in der auf die Kupplungskugel aufgesetzten Stellung der Kupplungskugelaufnahme die Halteelemente wieder in die Bereitschaftsstellung überführen kann.

Dies könnte beispielsweise durch manuelle Einwirkung erfolgen.

Eine vorteilhafte Lösung sieht vor, dass die Positioniervorrichtung die Halteelemente, beispielsweise durch Einwirkung eines federelastischen Elements, selbsttätig in die Bereitschaftsstellung überführt und selbsttätig in dieser hält.

Darüber hinaus sieht eine weitere vorteilhafte Lösung vor, dass mit der Positioniervorrichtung die Halteelemente in die die Kupplungskugel kraftschlüssig festlegende Spannstellung überführbar sind, das heißt, dass die Positioniervorrichtung nicht nur dazu dient, die Halteelemente in die Bereitschaftsstellung zu überführen, sondern auch gleichzeitig dazu eingesetzt werden kann, um die Halteelemente in die Spannstellung zu überführen.

Insbesondere ist es vorteilhaft, wenn die Positioniervorrichtung so ausgebildet ist, dass die Halteelemente von der Bereitschaftsstellung ausgehend in die Spannstellung überführbar sind.

Das heißt, dass die Positioniervorrichtung beim Aufsetzen der Kupplungskugelaufnahme auf die Kupplungskugel dafür Sorge trägt, dass die Halteelemente zunächst in die Bereitschaftsstellung übergehen und dass dann ausgehend von der Bereitschaftsstellung mittels der Positioniervorrichtung ein Übergang der Halteelemente in die Spannstellung erfolgt.

Besonders günstig ist es, wenn die Positioniervorrichtung so ausgebildet ist, dass die Halteelemente durch manuelle Einwirkung auf ein Betätigungselement der Positioniervorrichtung, beispielsweise in Richtung des Kugelhalses, in die Spannstellung überführt werden.

Hinsichtlich der Ausbildung der Positioniervorrichtung wurden im Zusammenhang mit der bisherigen Erläuterung der einzelnen Ausführungsformen keine näheren Angaben gemacht.

So sieht eine vorteilhafte Lösung vor, dass die Positioniervorrichtung zur Bewegung der Halteelemente in die jeweiligen Stellungen relativ zueinander mit einem Kniehebelmechanismus versehen ist.

Ein derartiger Kniehebelmechanismus hat zum Einen den Vorteil, dass dieser einfach aufgebaut ist und zum anderen den Vorteil, dass sich mit diesem, insbesondere beim Übergang in die Spannstellung, die für die kraftschlüssige Fixierung der Kupplungskugel durch die Haltevorrichtung erforderlichen hohen Spannkräfte in einfacher Weise erzielen lassen.

Insbesondere ist dabei der Kniehebelmechanismus so ausgebildet, dass dieser in einer ersten Knickstellung die Halteelemente in der Bereitschaftsstellung hält.

Ferner ist zweckmäßigerweise vorgesehen, dass der Kniehebelmechanismus in eine Übertotpunktstellung bewegbar ist, in welcher dieser die Halteelemente in der Spannstellung hält.

Eine derartige Übertotpunktstellung des Kniehebelmechanismus ist ein besonderer Vorteil desselben, da sich kurz unmittelbar vor dem Übergang in den Totpunkt und auch in der Übertotpunktstellung in einfacher Weise bei geringen Betätigungskräften hohe Spannkräfte erzielen lassen.

Hinsichtlich der Haltevorrichtung wurde bislang lediglich spezifiziert, dass diese ein erstes Halteelement und ein zweites Halteelement aufweist.

Besonders vorteilhaft ist es, wenn die Haltevorrichtung eine Halteeinheit aufweist, die in der Haltestellung der Haltevorrichtung die Montageeinheit mittels mindestens eines dritten Halteelements gegen ein Abheben von der Kupplungskugel sichert.

Damit ist in einfacher Weise die Möglichkeit geschaffen, in der Haltestellung, unabhängig von dem ersten und zweiten Halteelement, den Lastenträger an dem Kugelhals mit der Kupplungskugel zu fixieren.

Besonders vorteilhaft ist es dabei, wenn die Positioniervorrichtung und die Halteeinheit mit einem gemeinsamen Betätigungselement gekoppelt und durch dieses gemeinsam betätigbar sind, so dass eine Bedienungsperson nicht die Positioniervorrichtung für die Halteelemente und die Halteeinheit separat betätigen muss.

Insbesondere ist in diesem Zusammenhang vorgesehen, dass bei einer Einwirkung auf das Betätigungselement zum Lösen des Lastenträgers von dem Kugelhals und der Kupplungskugel die Haltevorrichtung die Halteelemente in eine die Kupplungskugel freigebende Relativposition derselben überführt und dass gleichzeitig die Halteeinheit in ihre Freigabestellung übergeht.

Das heißt, dass bei dieser Lösung durch eine einzige Einwirkung auf das Betätigungselement sowohl die Halteelemente in ihre freigebende Relativposition überführt werden und gleichzeitig die Halteeinheit in ihre Freigabestellung übergeht, in welcher der Lastenträger von dem Kugelhals lösbar ist.

Insbesondere erfolgt dabei die Einwirkung auf das Betätigungselement im Sinne eines Anhebens des Betätigungselements, insbesondere in einer Richtung weg vom Kugelhals, und somit auch im Sinne eines Anhebens des Lastenträgers, so dass sich damit der Lastenträger in einfacher Weise von dem Kugelhals abheben lässt.

Ferner ist es günstig, wenn mit dem Betätigungselement die Halteeinheit von einem in die Kupplungskugel in der Haltestellung der Haltevorrichtung formschlüssig in der Kupplungskugelaufnahme sichernden Sicherungsstellung in eine die Kupplungskugel zur Bewegung aus der Kupplungskugelaufnahme heraus freigebende Freigabestellung überführt werden kann.

Ferner ist vorzugsweise das mindestens eine dritte Halteelement so ausgebildet, dass dieses in der Haltestellung an der Kupplungskugel angreift und die Montageeinheit durch Formschluss gegen ein Abheben von der Kupplungskugel sichert.

Damit ist bereits durch das Halteelement mit der Halteeinheit die Möglichkeit geschaffen, den Lastenträger sicher an der Kupplungskugel zu führen, so dass lediglich noch die Frage besteht, inwieweit der Lastenträger gegen ein Drehen um eine vertikale Achse und ein Kippen um horizontale Achsen gesichert wird.

Besonders günstig ist es, wenn das dritte Halteelement in einer Sicherungsstellung an der Kupplungskugel angreift und dabei insbesondere in der Sicherungsstellung in die Kupplungskugelaufnahme des Gehäuses hineinragt.

Hinsichtlich der Anordnung des dritten Halteelements wurden ebenfalls noch keine näheren Angaben gemacht.

So sieht eine vorteilhafte Lösung vor, dass das dritte Halteelement in einer Führung zwischen der Sicherungsstellung und der Freigabestellung bewegbar geführt ist und dass insbesondere die Führung quer zur Kupplungskugelaufnahme verläuft.

Zum Betätigen des dritten Halteelements und insbesondere zum Bewegen des dritten Halteelements von der Freigabestellung in die Sicherungsstellung ist vorzugsweise vorgesehen, dass in das dritte Halteelement in der Sicherungsstellung durch eine Aktivierungseinrichtung beaufschlagt ist.

Insbesondere umfasst die Aktivierungseinrichtung ein Keilgetriebe zum Beaufschlagen des dritten Halteelements.

Darüber hinaus ist vorzugsweise die Aktivierungseinrichtung so ausgebildet, dass sie mit einem Betätigungselement der Haltevorrichtung gekoppelt ist.

Insbesondere ist vorgesehen, dass beim Betätigen des Betätigungselements dieses auf die Aktivierungseinrichtung einwirkt und diese von der Sicherungsstellung in die Freigabestellung bewegt.

Vorzugsweise ist die Kopplung zwischen dem Betätigungselement und der Haltevorrichtung so ausgebildet, dass diese lediglich bei einem Betätigen des Betätigungselements zum Lösen des Lastenträgers von dem Kugelhals und der Kupplungskugel auf die Aktivierungseinrichtung einwirkt und diese von der Sicherungsstellung in die Freigabestellung bewegt, während alle anderen Einwirkungen auf das Betätigungselement sich nicht auf die Aktivierungseinrichtung auswirken.

Dies lässt sich insbesondere dadurch realisieren, dass das Betätigungselement mittels einer Freigangkupplung mit der Halteeinheit gekoppelt ist.

Dabei ist die Freigangkupplung vorzugsweise so ausgebildet, dass sie bei einem Einwirken auf das Betätigungselement zum Überführen der ersten und zweiten Halteelemente von der Bereitschaftsstellung in die Freigabestellung auch die Halteeinheit von der Sicherungsstellung in die Freigabestellung überführt, jedoch bei einem Einwirken auf das Betätigungselement zum Überführen der ersten und zweiten Halteelemente in die Bereitschaftsstellung und/oder die Spannstellung nicht auf die Halteeinheit einwirkt.

Durch diese Lösung lässt sich die Halteeinheit so konzipieren, dass sie den Lastenträger beim Aufsetzen auf den Kugelhals mit der Kupplungskugel in der Haltestellung selbsttätig sichert.

Um zu erreichen, dass die Freigabestellungssicherung die Aktivierungseinrichtung nach einem Überführen derselben in die Freigabestellung und Entfernen der Kupplungskugel aus der Kupplungskugelaufnahme in der Freigabestellung verbleibt, und zwar so lange bis die Kupplungskugel wieder in die Kupplungskugelaufnahme eintritt, und dann erst, insbesondere federbeaufschlagt, in die Sicherungsstellung übergeht, ist eine Freigabestellungssicherung vorgesehen.

Insbesondere ist die Aktivierungseinrichtung so ausgebildet, dass sie mit einer Freigabestellungssicherung versehen ist, welche in einer blockierenden Stellung die Aktivierungseinrichtung in der Freigabestellung hält.

Dabei ist die Freigabestellungssicherung in ihrer Freigabestellung so ausgebildet, dass sie auf die in der Freigabestellung stehende Aktivierungseinrichtung dann nicht blockierend einwirkt, wenn die Kupplungskugel in der Kupplungskugelaufnahme aufgenommen ist oder in diese eintritt und somit die Möglichkeit eröffnet, dass die Aktivierungseinrichtung aufgrund eines insbesondere auf diese wirkenden federelastischen Elements in diesem Fall selbst in die Sicherungsstellung übergeht und somit auch das dritte Halteelement in die Sicherungsstellung bewegt.

Insbesondere ist vorgesehen, dass die Freigabestellungssicherung mit einem Tastelement versehen ist, welches die die Aktivierungseinrichtung blockierende Stellung der Freigabestellungssicherung dann aufhebt oder verhindert, wenn der Lastenträger auf den Kugelhals mit der Kupplungskugel aufgesetzt wird oder die Kupplungskugel und der Kugelhals relativ zur Kupplungskugelaufnahme in einer Lastenträgerhaltestellung stehen, in welcher die Kupplungskugel in die Kupplungskugelaufnahme eingreift und somit diese durch die Haltestellung der Halteeinheit gesichert wird oder werden soll.

Insbesondere ist vorgesehen, dass die Freigabestellungssicherung selbsttätig in die Sicherungsstellung übergeht, wenn die Aktivierungseinrichtung durch Betätigen des Betätigungselements in die Freigabestellung übergeht und die Kupplungskugel nicht mehr in der Kupplungskugelaufnahme steht.

Ein derartiger selbsttätiger Übergang der Freigabestellungssicherung in die Sicherungsstellung erfolgt vorzugsweise dadurch, dass ein federelastisches Element auf die Freigabestellungssicherung im Sinne eines Übergangs in die Sicherungsstellung einwirkt.

Im Zusammenhang mit der bisherigen Beschreibung der erfindungsgemäßen Positionierkörperaufnahme wurde lediglich das Vorhandensein mindestens einer Positionierkörperaufnahme definiert.

Besonders vorteilhaft ist es dabei, wenn die Montageeinheit zwei Positionierkörperaufnahmen aufweist, die aufeinander gegenüberliegenden Seiten der Kupplungskugelaufnahme angeordnet sind.

Derartige Positionierkörperaufnahmen wirken besonders vorteilhaft mit Positionierkörpern zusammen, die auf einander gegenüberliegenden Seiten des Kugelhalses angeordnet sind.

Ferner sind vorteilhafterweise die Positionierkörperaufnahmen so angeordnet, dass sie außerhalb der Kupplungskugelaufnahme liegen, so dass die Kupplungskugel zwischen den Positionierkörperaufnahmen hindurch in die Kupplungskugelaufnahme hinein bewegt werden kann, wenn ein Aufsetzen der Kupplungskugelaufnahme der Montageeinheit auf die Anhängekupplung erfolgt.

Darüber hinaus ist vorteilhafterweise vorgesehen, dass die Positionierkörperaufnahmen so ausgebildet sind, dass sie die Positionierkörper so weit aufnehmen, dass die Positionierkörperaufnahmen auf einander gegenüberliegenden Seiten des jeweiligen Positionierkörpers anliegen und somit eine Kippsicherung für die Montageeinheit darstellen, wenn die Montageeinheit mittels der Halteeinheit in der Haltestellung an der Kupplungskugel fixiert ist, jedoch in der Haltestellung die Montageeinheit noch Kippbewegungen relativ zur Kupplungskugel ausführen kann.

Ferner ist vorzugsweise vorgesehen, dass die Positionierkörperaufnahmen auch an den Positionierkörpern auf deren dem Kugelhals abgewandten Stirnseiten anliegen.

Insbesondere sind bei der erfindungsgemäßen Lösung die Positionierkörperaufnahmen so ausgebildet, dass sie eine umgekehrt U-förmige Kontur aufweisen, mit welcher diese beim Aufsetzen der Montageeinheit auf die Anhängekupplung die Positionierkörper auf einander gegenüberliegenden Seiten übergreifen und dabei an den Positionierflächen der Positionierkörper, die quer zu einer Längsmittelebene des Kugelhalses verlaufen, anliegen.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Lastenträger (40) für einen Kugelhals (12) und eine von dem Kugelhals (12) getragene Kupplungskugel (26) aufweisende Anhängekupplungen (10) für Kraftfahrzeuge, umfassend eine Montageeinheit (50), die eine auf die Kupplungskugel (26) aufsetzbare Kupplungskugelaufnahme (104) und eine der Kupplungskugelaufnahme (104) zugeordnete Haltevorrichtung (130) aufweist, welche bei auf die Kupplungskugel (26) aufgesetzter und somit in einer Fixierposition stehender Kupplungskugelaufnahme (104) die Kupplungskugelaufnahme (104) mit der Kupplungskugel (26) verbindet, und mindestens eine mit der Montageeinheit (50) verbundene Positionierkörperaufnahme (122), welche bei auf die Kupplungskugel (26) aufgesetzter Kupplungskugelaufnahme (104) zur kippsicheren und Kippmomente aufnehmenden Abstützung der Montageeinheit (50) an dem Kugelhals (10) mit mindestens einem am Kugelhals (10) fest angeordneten Positionierkörper (54) in Wirkverbindung bringbar ist, wobei die Haltevorrichtung (130) in eine Spannstellung überführbar ist, in welcher die Kupplungskugelaufnahme (104) mit der Haltevorrichtung (130) an der Kupplungskugel (26) derart kraftschlüssig festgelegt ist, dass die Montageeinheit (50) den Lastenträger (40) allein durch den Kraftschluss an der Kupplungskugel (26) kippfrei fixiert.
2. Lastenträger nach Ausführungsform 1, wobei die Haltevorrichtung (130) so ausgebildet ist, dass diese beim Aufsetzen der Kupplungskugelaufnahme (104) auf die Kupplungskugel (26) selbsttätig in eine Haltestellung übergeht, in welcher die Kupplungskugelaufnahme (104) unlösbar, jedoch verkippbar mit der Kupplungskugel (26) verbunden ist.
3. Lastenträger nach Ausführungsform 1 oder 2, wobei die Haltevorrichtung (130) mindestens ein erstes Halteelement (132) und ein zweites Halteelement (134) umfasst, und dass die Halteelemente (132, 134) beim Aufsetzen der Kupplungskugelaufnahme (104) auf die Kupplungskugel (26) die Kupplungskugel (26) zwischen sich aufnehmen und sich dabei an der Kupplungskugel (26) anlegen.
4. Lastenträger nach Ausführungsform 3, wobei die Halteelemente (132, 134) in einer Spannstellung der Haltevorrichtung (130) die Kupplungskugel (26) zwischen sich aufnehmen und zwischen sich kraftschlüssig einspannen.
5. Lastenträger nach Ausführungsform 3 oder 4, wobei die Halteelemente (132, 134) in der Haltestellung der Haltevorrichtung (130) die Kupplungskugel (26) zwischen sich aufnehmen und auf dieser gleitend anliegen.
6. Lastenträger nach einer der voranstehenden Ausführungsformen, wobei die Haltevorrichtung (130) eine mit den Halteelementen (132, 134) zusammenwirkende Positioniervorrichtung (180) aufweist, mittels welcher die Halteelemente (132, 134) in der jeweiligen Stellung relativ zueinander positionierbar und fixierbar sind.
7. Lastenträger nach einer der Ausführungsformen 3 bis 6, wobei die Positioniervorrichtung (180) so ausgebildet ist, dass die Halteelemente (132, 134) mit dieser vor dem Aufsetzen der Kupplungskugelaufnahme (104) in einer Bereitschaftsstellung positionierbar sind.
8. Lastenträger nach Ausführungsform 7, wobei durch das Anlegen der Halteelemente (132, 134) an der Kupplungskugel (26) beim Aufsetzen der Kupplungskugelaufnahme (104) auf die Kupplungskugel (26) ein Aufheben der Bereitschaftsstellung erfolgt.
9. Lastenträger nach Ausführungsform 8, wobei das Aufheben der Bereitschaftsstellung dadurch erfolgt, dass die Halteelemente (132, 134) bei Kontakt mit der Kupplungskugel (26) von einander weg bewegt werden.
10. Lastenträger nach einer der Ausführungsformen 6 bis 9, wobei mit der Positioniervorrichtung (180) die Halteelemente (132, 134) in die die Kupplungskugel (26) kraftschlüssig festlegende Spannstellung überführbar sind.
11. Lastenträger nach Ausführungsform 10, wobei die Positioniervorrichtung (180) so ausgebildet ist, dass die Halteelemente (132, 134) von der Bereitschaftsstellung ausgehend in die Spannstellung überführbar sind.
12. Lastenträger nach Ausführungsform 11, wobei die Positioniervorrichtung (180) so ausgebildet ist, dass die Halteelemente (132, 134) durch manuelle Einwirkung auf ein Betätigungselement (280) der Positioniervorrichtung (180) von der Bereitschaftsstellung ausgehend in die Spannstellung überführt werden.
13. Lastenträger nach einer der Ausführungsformen 6 bis 12, wobei die Positioniervorrichtung (180) zur Bewegung der Halteelemente (132, 134) in die jeweiligen Stellungen relativ zueinander mit einem Kniehebelmechanismus (182) versehen ist.
14. Lastenträger nach Ausführungsform 13, wobei der Kniehebelmechanismus (182) in einer ersten Knickstellung die Halteelemente (132, 134) in der Bereitschaftsstellung hält.
15. Lastenträger nach Ausführungsform 13 oder 14, wobei der Kniehebelmechanismus (182) in eine Übertotpunktstellung bewegbar ist, in welcher dieser die Halteelemente (132, 134) in der Spannstellung hält.
16. Lastenträger nach einer der voranstehenden Ausführungsformen, wobei die Haltevorrichtung (130) eine Halteeinheit (136) aufweist, die in der Haltestellung der Haltevorrichtung (130) die Montageeinheit (50) mittels mindestens eines dritten Halteelements (212) gegen ein Abheben von der Kupplungskugel (26) sichert.
17. Lastenträger nach Ausführungsform 16, wobei die Positioniervorrichtung (180) und die Halteeinheit (136) mit einem gemeinsamen Betätigungselement (280) gekoppelt und durch dieses gemeinsam betätigbar sind.
18. Lastenträger nach Ausführungsform 17, wobei bei einer Einwirkung auf das Betätigungselement (280) zum Lösen des Lastenträgers (40) von dem Kugelhals (12) die Haltevorrichtung (130) die Halteelemente (132, 134) in eine die Kupplungskugel (26) freigebende Relativposition derselben überführt und dass gleichzeitig die Halteeinheit (136) in ihre Freigabestellung übergeht.
19. Lastenträger nach Ausführungsform 18, wobei mit dem Betätigungselement (280) die Halteeinheit (136) von einer die Kupplungskugel (26) in der Haltestellung der Haltevorrichtung (130) formschlüssig in der Kupplungskugelaufnahme (104) sichernden Sicherungsstellung in eine die Kupplungskugel (26) zur Bewegung aus oder die Kupplungskugel in die Kupplungskugelaufnahme (104) eingreift.
20. Lastenträger nach einer der Ausführungsformen 16 bis 19, wobei das mindestens eine dritte Halteelement (212) in der Haltestellung an der Kupplungskugel (26) angreift und die Montageeinheit (50) durch Formschluss gegen ein Abheben von der Kupplungskugel (26) sichert.
21. Lastenträger nach einer der Ausführungsformen 16 bis 20, wobei das dritte Halteelement (212) in einer Sicherungsstellung an der Kupplungskugel (26) angreift und dass insbesondere das dritte Halteelement (212) in der Sicherungsstellung in die Kupplungskugelaufnahme (104) des Gehäuses (102) hineinragt.
22. Lastenträger nach einer der Ausführungsformen 16 bis 21, wobei das dritte Halteelement (212) in einer Führung (218) zwischen der Sicherungsstellung und einer Freigabestellung bewegbar geführt ist und dass insbesondere die Führung (218) quer zur Kupplungskugelaufnahme (104) verläuft.
23. Lastenträger nach einer der Ausführungsformen 16 bis 22, wobei das dritte Halteelement (212) in der Sicherungsstellung durch eine Aktivierungseinrichtung (240) beaufschlagt ist und dass insbesondere die Aktivierungseinrichtung (240) ein Keilgetriebe (260) umfasst.
24. Lastenträger nach Ausführungsform 23, wobei die Aktivierungseinrichtung (240) mit einem Betätigungselement (280) der Haltevorrichtung (130) gekoppelt ist und dass insbesondere beim Betätigen des Betätigungselements (280) dieses auf die Aktivierungseinrichtung (240) einwirkt und diese von der Sicherungsstellung in die Freigabestellung bewegt.
25. Lastenträger nach einer der Ausführungsformen 17 bis 24, wobei das Betätigungselement (280) mittels einer Freigangkupplung (282) mit der Halteeinheit (136) gekoppelt ist.
26. Lastenträger nach Ausführungsform 25, wobei die Freigangkupplung (282) so ausgebildet ist, dass sie bei einem Einwirken auf das Betätigungselement (280) zum Überführen der ersten und zweiten Halteelemente (132, 134) von der Bereitschaftsstellung in die Freigabestellung auch die Halteeinheit (136) von der Sicherungsstellung in die Freigabestellung überführt, jedoch bei einem Einwirken auf das Betätigungselement (280) zum Überführen der ersten und zweiten Halteelemente (132, 134) in die Bereitschaftsstellung und/oder die Spannstellung nicht auf die Halteeinheit (136) einwirkt.
27. Lastenträger nach einer der Ausführungsformen 23 bis 26, wobei die Aktivierungseinrichtung (240) mit einer Freigabestellungssicherung (290) versehen ist, welche in einer blockierenden Stellung die Aktivierungseinrichtung (240) in der Freigabestellung hält.
28. Lastenträger nach Ausführungsform 27, wobei die Freigabestellungssicherung (290) in ihrer Freigabestellung auf die in der Freigabestellung stehende Aktivierungseinrichtung (240) nicht blockierend einwirkt.
29. Lastenträger nach Ausführungsform 27 oder 28, wobei die Freigabestellungssicherung (290) mit einem Tastelement (298) versehen ist, welches die die Aktivierungseinrichtung (240) blockierende Stellung der Freigabestellungssicherung (290) dann aufhebt oder verhindert, wenn der Lastenträger (40) auf den Kugelhals (12) mit der Kupplungskugel (26) aufgesetzt wird oder die Kupplungskugel (26) und der Kugelhals (12) relativ zur Kupplungskugelaufnahme (104) in einer Lastenträgerhaltestellung stehen in welcher die Kupplungskugel in die Kupplungskugelaufnahme 104 eingreift und somit diese durch die Haltestellung der Halteeinheit (136) gesichert wird.
30. Lastenträger nach einer der Ausführungsformen 27 bis 29, wobei die Freigabestellungssicherung (290) selbsttätig in die Sicherungsstellung übergeht, wenn die Aktivierungseinrichtung (240) durch Betätigen des Betätigungselements (280) in die Freigabestellung übergeht und die Kupplungskugel (26) nicht mehr in der Kupplungskugelaufnahme (104) steht.
31. Lastenträger nach einer der voranstehenden Ausführungsformen, wobei die Montageeinheit (50) zwei Positionierkörperaufnahmen (122) aufweist, die aufeinander gegenüberliegenden Seiten der Kupplungskugelaufnahme (104) angeordnet sind.
32. Lastenträger nach Ausführungsform 31, wobei die zwei Positionierkörperaufnahmen mit Positionierkörpern (54) zusammen wirken, die auf einander gegenüberliegenden Seiten des Kugelhalses (12) angeordnet sind.
33. Lastenträger nach Ausführungsform 31 oder 32, wobei die Positionierkörperaufnahmen (122) so angeordnet sind, dass sie außerhalb der Kupplungskugelaufnahme (104) liegen.
34. Lastenträger nach einer der Ausführungsformen 31 bis 33, wobei die Positionierkörperaufnahmen (122) so ausgebildet sind, dass sie die Positionierkörper (54) so weit aufnehmen, dass die Positionierkörperaufnahmen (122) auf einander gegenüberliegenden Seiten des jeweiligen Positionierkörpers (54) anliegen.
35. Lastenträger nach einer der Ausführungsformen 31 bis 34, wobei die Positionierkörperaufnahmen (122) auch an den Positionierkörpern (54) auf deren dem Kugelhals (12) abgewandten Stirnseiten anliegen.
36. Lastenträger nach einer der Ausführungsformen 31 bis 35, wobei Positionierkörperaufnahmen (122) so ausgebildet sind, dass sie eine umgekehrt U-förmige Kontur aufweisen, mit welcher diese beim Aufsetzen der Montageeinheit (50) auf die Anhängekupplung (10) die Positionierkörper (54) auf einander gegenüberliegenden Seiten übergreifen und dabei an den Positionierflächen (64, 66) der Positionierkörper (54), die quer zu einer Längsmittelebene (30) des Kugelhalses (10) verlaufen, anliegen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Seitenansicht eines Kraftfahrzeugs mit einer Anhängekupplung und einem an der Anhängekupplung montierten Lastenträgers;
- Fig. 2: eine vergrößerte Darstellung der Seitenansicht gemäß Fig. 1 eines Kugelhalses mit einer an diesem gehaltenen Montageeinheit des Lastenträgers;
- Fig. 3: eine Ansicht des Kugelhalses in Richtung eines Pfeils A in Fig. 1;
- Fig. 4: eine Ansicht ähnlich Fig. 2 vor einem Aufsetzen der Montageeinheit auf die Kupplungskugel und den Kugelhals;
- Fig. 5: eine perspektivische Darstellung einer Montageeinheit eines erfindungsgemäßen Lastenträgers;
- Fig. 6: eine Draufsicht in Richtung des Pfeils B auf die Montageeinheit gemäß Fig. 5;
- Fig. 7: eine perspektivische Darstellung der erfindungsgemäßen Montage-einheit mit Blick in die Kupplungskugelaufnahme und Blick auf ein erstes Halteelement mit einer Kugelaufnahmefläche;
- Fig. 8: einen Schnitt längs Linie 8-8 in Fig. 6 und einer in einer Bereitschaftsstellung stehenden Haltevorrichtung;
- Fig. 9: eine Ansicht der Montageeinheit mit Blick in Richtung des Pfeils C in Fig. 6 und in der Bereitschaftsstellung der Haltevorrichtung mit den Halteelementen;
- Fig. 10: eine Ansicht ähnlich Fig. 9 nach einem Aufsetzen der Kupplungskugelaufnahme auf die Kupplungskugel der Anhängekupplung wobei die Halteelemente an der Kupplungskugel anliegen;
- Fig. 11: einen Schnitt längs Linie 11-11 in Fig. 10 in einer Haltestellung der Haltevorrichtung durch ein drittes Halteelement in einer Sicherungsstellung;
- Fig. 12: einen Schnitt längs Linie 11-11 in Fig. 10 bei in einer Lösestellung des dritten Halteelements;
- Fig. 13: eine Ansicht ähnlich Fig. 9 bei einer Fixierung der Montageeinheit an dem Kugelhals und der Kupplungskugel in einer Spannstellung
- Fig. 14: einen Schnitt längs Linie 14-14 in Fig. 13 in der Spannstellung der Haltevorrichtung;
- Fig. 15: einen Schnitt ähnlich Fig. 14 bei von dem Kugelhals und der Kupplungskugel abgehobener Montageeinheit;
- Fig. 16: eine Ansicht ähnlich Fig. 13 bei abgehobener Montageeinheit gemäß Fig. 15 ohne Wandkörper jedoch mit in diesem geführten Keilkörper und Sicherungskörper;
- Fig. 17: einen Schnitt längs Linie 17-17 bei auf der Kupplungskugel aufgesetzter Kupplungskugelaufnahme in der Spannstellung der Haltevorrichtung ;
- Fig. 18: einen Schnitt ähnlich Fig. 17 durch die Montageeinheit in der Spann-stellung allerdings bei einer Anhängekupplung mit einem Kugelhals ohne Positionierkörper und

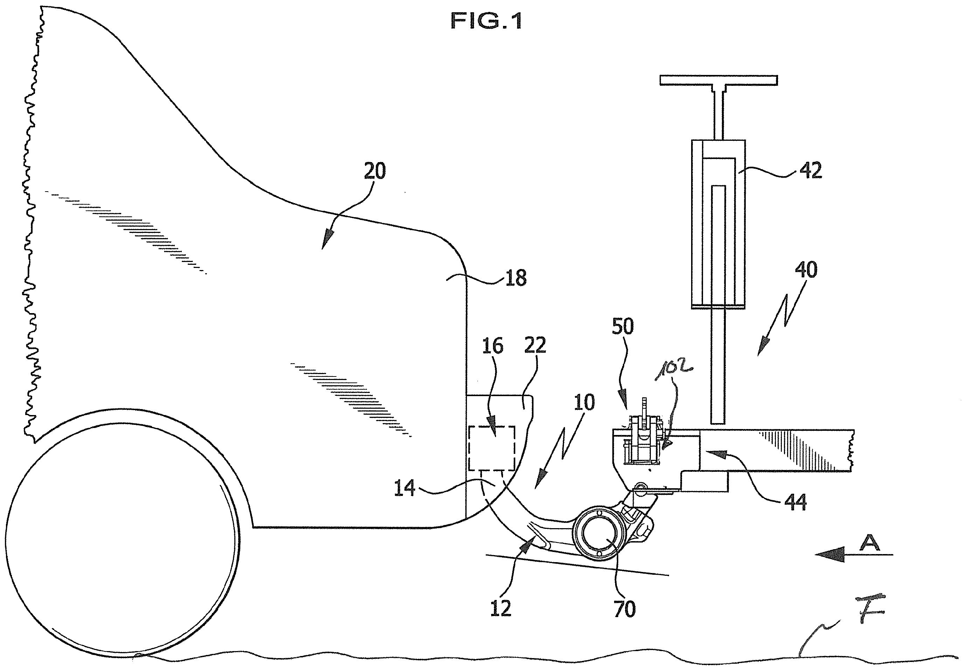

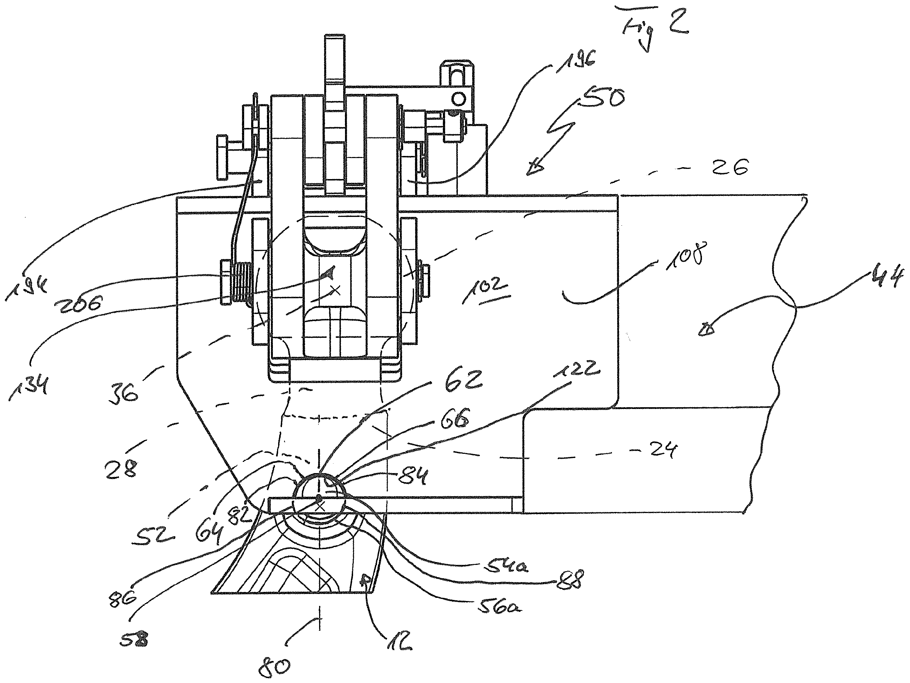

Ein in Fig. 1 und 2 dargestelltes Ausführungsbeispiel einer als Ganzes mit 10 bezeichneten Anhängekupplung umfasst einen Kugelhals 12, welcher an einem ersten Ende 14 mit einem Kugelhalsträger 16 verbunden ist, welcher seinerseits fest an einer Heckpartie 18 einer als Ganzes mit 20 bezeichneten Kraftfahrzeugkarosserie eines Kraftfahrzeugs gehalten ist, wobei der Kugelhalsträger 16 vorzugsweise verdeckt durch eine hintere Stoßfängereinheit 22 fest mit der Heckpartie 18 verbunden ist.

Der Kugelhalsträger 16 umfasst beispielsweise einen üblichen sich unter der Stoßfängereinheit 22 und parallel zu dieser sowie quer zu einer Längsrichtung der Kraftfahrzeugkarosserie 20 erstreckenden Querträger, welcher seinerseits mit der Heckpartie 18 verbunden ist, und außerdem entweder eine Aufnahme, an welcher Kugelhals 12 mit dem Ende 14 fest oder lösbar gehalten ist, oder ein Schwenklager, mit welchem der Kugelhals 12 um eine oder mehrere Achsen relativ zu der Heckpartie 18 zwischen einer Arbeitsstellung, dargestellt in Fig. 1, und einer nicht dargestellten Ruhestellung verschwenkbar ist, wobei der Kugelhals 12 sich in der Ruhestellung ungefähr parallel zur Stoßfängereinheit 22 erstreckt und von der hinteren Stoßfängereinheit 22 weitgehend verdeckt zwischen dieser und der Heckpartie 18 der Kraftfahrzeugkarosserie 20 angeordnet ist.

Wie in Fig. 1, Fig. 2 und Fig. 3 dargestellt, ist der Kugelhals 12 zwischen seinem ersten Ende 14 und dem diesem gegenüberliegenden zweiten Ende 24 abgekröpft, so dass das Ende 24 sich in der Arbeitsstellung von einer Fahrbahn F weg erstreckt, und trägt an dem Ende 24 eine als Ganzes mit 26 bezeichnete Kupplungskugel, wobei zwischen der Kupplungskugel 26 und dem Ende 24 eine als Kugelansatz 28 bezeichnete Einschnürung vorgesehen ist, welche sich an das Ende 24 in Fortsetzung eines Verlaufs des Kugelhalses 12 anschließt und über welche die Kupplungskugel 26 mit dem zweiten Ende 24 des Kugelhalses 12 verbunden ist.

Die Kupplungskugel 26 dient dabei üblicherweise zum Anhängen eines Anhängers, wobei ein Anhänger eine Zugkugelkupplung aufweist, welche die Kupplungskugel 24 übergreifend mit dem Kugelhals 12 verbindbar ist.

In seiner Arbeitsstellung, dargestellt in Fig. 1, 2 und 3, ist der Kugelhals 12 zumindest im Bereich des Kugelansatzes 28 und des diesen tragenden Endes 24 symmetrisch zu einer vertikalen Längsmittelebene 30 ausgebildet, in gleicher Weise wie auch die Kupplungskugel 26, wobei die Längsmittelebene 30 nicht nur die Längsmittelebene 30 des Kugelhalses 12 und der Anhängekupplung 10 ist, sondern in der Arbeitsstellung der Anhängekupplung 10 auch mit der vertikalen Längsmittelebene 30 der Heckpartie 18 und der Kraftfahrzeugkarosserie 20 zusammenfällt.

Dabei liegt insbesondere eine Mittelachse 32 der Kupplungskugel 26 in der vertikalen Längsmittelebene 30, wobei die Mittelachse 32 der Kupplungskugel 26 dadurch festgelegt ist, dass sie gleichzeitig eine Mittelachse 32 des Kugelansatzes 28 darstellt und/oder insbesondere außerdem dadurch festgelegt ist, dass sie mittig und senkrecht zu einer Abflachung 34 der Kupplungskugel 26 verläuft, welche an der Kupplungskugel 26 auf einer dem Kugelansatz 28 gegenüberliegenden Seite vorgesehen ist, so dass die Form der Kupplungskugel 26 einerseits im Bereich des Kugelansatzes 28 und andererseits im Bereich der Abflachung 34 von einer um einen auf der Mittelachse 32 liegenden Kugelmittelpunkt 36 verlaufenden vollständigen Kugelfläche 38 abweicht.

Wie in Fig. 1 und 2 dargestellt, kann die Anhängekupplung 10 nicht nur dazu dienen, einen Anhänger mit der Kraftfahrzeugkarosserie 20 zu verbinden, sondern auch dazu, einen als Ganzes mit 40 bezeichneten Lastenträger an der Kraftfahrzeugkarosserie 20 zu fixieren.

Der Lastenträger 40 dient dabei beispielsweise dazu, Fahrräder 42 zu transportieren, es ist aber auch denkbar, mit dem Lastenträger 40 andere Lasten beliebiger Art zu transportieren.

Der Lastenträger 40 umfasst eine Lastenträgerbasis 44, beispielsweise ausgebildet in Form eines Grundrahmens, zur Aufnahme der verschiedenen Lasten, welcher mit einer Montageeinheit 50 versehen ist, mit welcher der Lastenträger 40 an dem Kugelhals 12 festlegbar ist.

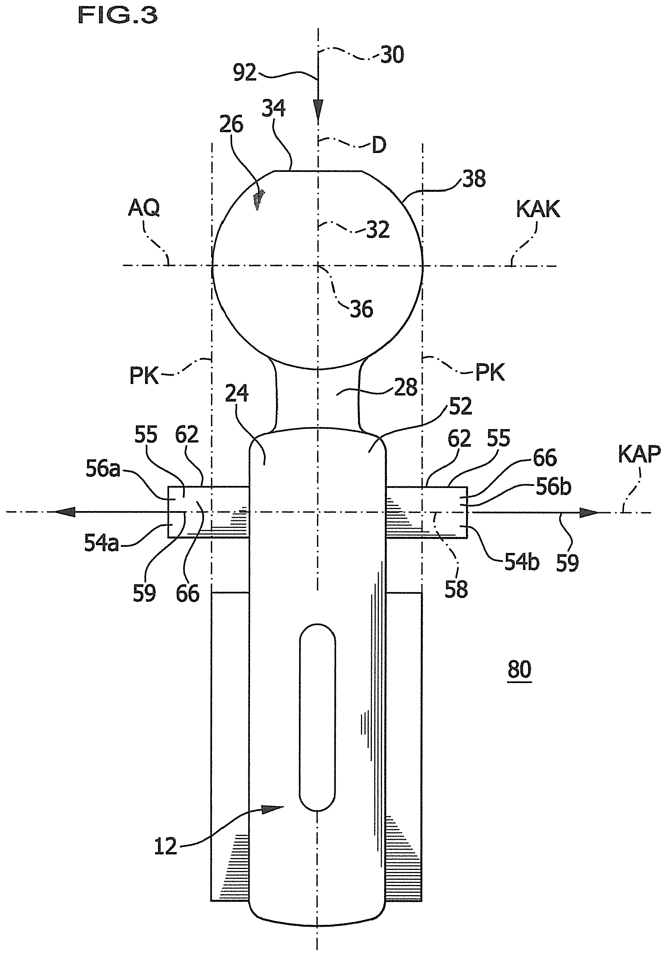

Wie in den Fig. 2 und 3 dargestellt, ist bei einem dargestellten Ausführungsbeispiel der Kugelhals 12 in einem unmittelbar an das Ende 24 und den Kugelansatz 28 angrenzenden Kugelhalsabschnitt 52 mit über diesen seitlich überstehenden Positionierkörpern 54a und 54b versehen, welche beispielsweise durch an den Kugelhalsabschnitt 52 angeformte und seitlich über den Kugelhalsabschnitt 52 überstehende, insbesondere massive Zapfen 56a, 56b, insbesondere mit einer zylindrischen Mantelfläche, ausgebildet sind.

In dem Fall, in dem der Kugelhals 12 mit einer Aufnahme 70 für eine Steckdose versehen ist, liegt der Kugelhalsabschnitt 52 zwischen der Aufnahme 70 und dem Ende 24.

Ferner erstreckt sich der Kugelhalsabschnitt 52 vorzugsweise ausgehend von dem Ende 24 entlang des Kugelhalses 12 maximal über eine Distanz die einem 1,5-fachen des Durchmessers der Kugelfläche 38 der Kupplungskugel 26 entspricht.

Vorzugsweise erstreckt sich der Kugelhalsabschnitt 52 ausgehend von dem Ende 24 lediglich über eine Distanz, die dem Durchmesser der Kugelfläche 38 entspricht.

Dabei sind die massiven Zapfen 56a und 56b symmetrisch zu der Längsmittelebene 30, angeordnet und erstrecken sich ausgehend von dem Kugelhalsabschnitt auch symmetrisch zu der vertikalen Längsmittelebene 30.

Alternativ zum Anformen der Positionierkörper 54 an den Kugelhalsabschnitts 52 besteht aber auch die Möglichkeit, die Positionierkörper 54 durch einen den Kugelhalsabschnitt 52 in einer Bohrung durchsetzenden Stift, beispielsweise mit einer zylindrischen Mantelfläche, zu realisieren, welcher mit seinen beiden Enden dann die Zapfen 56a, b bildet.

Vorzugsweise sind die Positionierkörper 54, insbesondere die Zapfen 56, so ausgebildet, dass die Form der Positionierkörper 54a und 54b jeweils spiegelsymmetrisch zur Längsmittelebene 30 gestaltet ist.

Wie insbesondere in Fig. 3 dargestellt, erstrecken sich die Positionierkörper 54a und 54b mit ihrer Längsachse 58 in einer Erstreckungsrichtung 59, die quer, vorzugsweise senkrecht, zur Längsmittelebene 30 verläuft.

Die Längsachse 58 liegt beispielsweise in einer sich quer, vorzugsweise senkrecht zur Längsmittelebene 30 erstreckenden insbesondere Querebene 80, die beispielsweise außerdem parallel zur Mittelachse 32 der Kupplungskugel 26 verläuft, insbesondere durch die Mittelachse 32 der Kupplungskugel 26 hindurch verläuft.

Die Positionierkörper 54 umfassen beiderseits auf einer Außenseite 55 derselben liegende erste Positionierflächen 64, 66, die parallel zur Längsachse 58 und zur Erstreckungsrichtung 59 verlaufen.

Insbesondere erstrecken sich die ersten Positionierflächen 64, 66 ausgehend von einer auf der Außenseite 55 liegenden und der Kupplungskugel 26 zugewandten Scheitellinie 62.

Die Scheitellinie 62 liegt dabei insbesondere in der Querebene 80, welche einerseits durch die Kupplungskugel 26 verläuft und andererseits die Positionierkörper 54a und 54b, insbesondere mittig, schneidet, wie in Fig. 3 dargestellt.

Auf gegenüberliegenden Seiten der Querebene 80 liegen die ersten Positionierflächen 64 und 66 der Positionierkörper 54a und 54b, die sich vorzugsweise parallel oder ein einem Winkel von bis zu 20° zu der Längsachse 58 der Positionierkörper 54a, 54b erstrecken, wobei die Positionierflächen 64 und 66 Teilflächen einer als Ganzes mit 68 bezeichneten geometrischen Außenmantelfläche der Positionierkörper 54a und 54b sind, welche den Kugelhalsabschnitt 52 schneidet.

Im Fall der Ausbildung der Positionierkörper 54a und 54b in Form zylindrischer Zapfen stellt die Außenmantelfläche 68 der Positionierkörper 54a und 54b eine Zylindermantelfläche dar, wobei die Längsachse 58 eine Zylinderachse zu dieser Zylindermantelfläche 68 bildet.

Die Positionierflächen 64 und 66 erstrecken dabei ausgehend von der Scheitellinie 62 beiderseits vorzugsweise in zunehmendem Abstand von der insbesondere vertikalen Querebene 80, wobei die Positionierflächen 64 und 66 sich zunächst quer zur Querebene 80 und auch quer zur Längsmittelebene 30 und sich mit zunehmendem Abstand von der Kupplungskugel 26 auch mit zunehmendem Abstand von der Querebene 80 verlaufende Positionierflächenbereiche 82 und 84 aufweisen, die in näherungsweise parallel oder parallel zu der Querebene 80 verlaufende Führungsflächenbereiche 86, 88 der ersten Positionierflächen 64 und 66 übergehen.

Dabei gehen die Positionierflächenbereiche 82 und 84 beispielsweise stufenlos in die Führungsflächenbereiche 86 bzw. 88 über.

Bei dem in den Fig. 2 bis 3 dargestellten Ausführungsbeispiel des erfindungsgemäßen Kugelhalses 12 liegen die Positionierkörper 54a und 54b derart nahe an dem Kugelansatz 28, dass ein Abstand der Scheitellinie 62 der Positionierkörper 54a, b von dem Ende 24 des Kugelhalses 12, an welchem der Kugelansatz 28 beginnt, kleiner ist als das 1,5-fache der Ausdehnung des Kugelansatzes 28 zwischen dem zweiten Ende 24 und der Kupplungskugel 26.

Ferner ist insbesondere der Abstand der Positionierkörper 54a und 54b von einer durch den Kugelmittelpunkt 36 und senkrecht zur Mittelachse 32 verlaufenden Äquatorebene AQ der Kupplungskugel 26 kleiner als der 1,5-fache Durchmesser der Kugelfläche 38 der Kupplungskugel 26.

Insbesondere liegen die ersten Positionierflächen 64, 66 mit den Positionierflächenbereichen 82, 84 und den Führungsflächenbereichen 86, 88 außerhalb einer Projektionskontur PK, das heißt auf einer dem Kugelhalsabschnitt 52 abgewandten Seite der Projektionskontur PK, die durch Projektion der Kupplungskugel 26 auf den Positionierkörper 54, insbesondere dessen Außenfläche 55 entsteht.

Somit liegt insbesondere der Kugelhalsabschnitt 52, der die Positionierkörper 54a, 54b trägt, innerhalb der Projektionskontur PK, und die Positionierkörper 54a, 54b erstrecken sich von diesem Kugelhalsabschnitt 52 ausgehend bis zu den ersten Positionierflächen 64, 66.

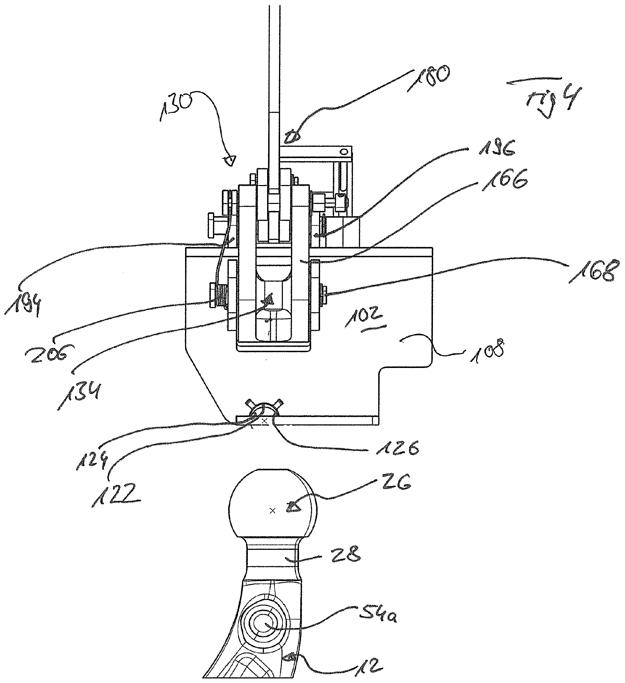

Dabei erfolgt die Projektion parallel zu einer Aufsetzrichtung 92, in welcher die Montageeinheit 50 auf die Kupplungskugel 26 und den Kugelhals 12 aufsetzbar ist (Fig. 4).

Die Aufsetzrichtung 92 verläuft vorzugsweise ungefähr parallel, insbesondere parallel zur Mittelachse 32.

Unter ungefähr parallel ist dabei zu verstehen, dass der Winkel zwischen der Aufsetzrichtung 92 und der Mittelachse 32 maximal 10° beträgt.

Auf den vorstehend beschriebenen Kugelhals 12, welcher an dem zweiten Ende 24 die Kupplungskugel 26 und im nahe dem zweiten Ende 24 liegenden Kugelhalsabschnitt 52 die Positionierkörper 54a und 54b trägt, ist die Montageeinheit 50 aufsetzbar, wobei das Aufsetzen der Montageeinheit 50 in der Aufsetzrichtung 92 erfolgt, welche insbesondere parallel zur Längsmittelebene 30 und ungefähr parallel zur Mittelachse 32 verläuft.

Unter dem ungefähr parallelem Verlauf der Aufsetzrichtung 92 ist zu verstehen, dass ein maximaler Winkel zwischen der Mittelachse 32 der Kupplungskugel 26 und der Aufsetzrichtung 92 weniger als 30° betragen soll, so dass die Aufsetzrichtung parallel und/oder schräg zur Mittelachse 32 oder auch gekrümmt verlaufen kann.

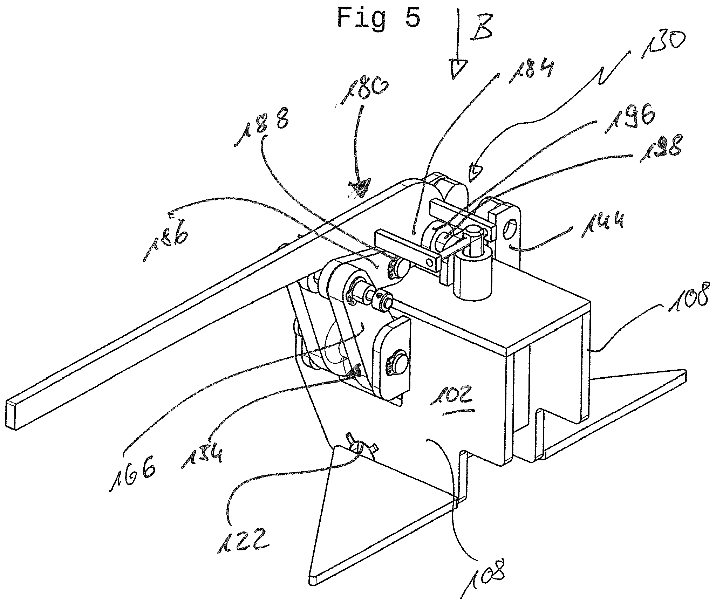

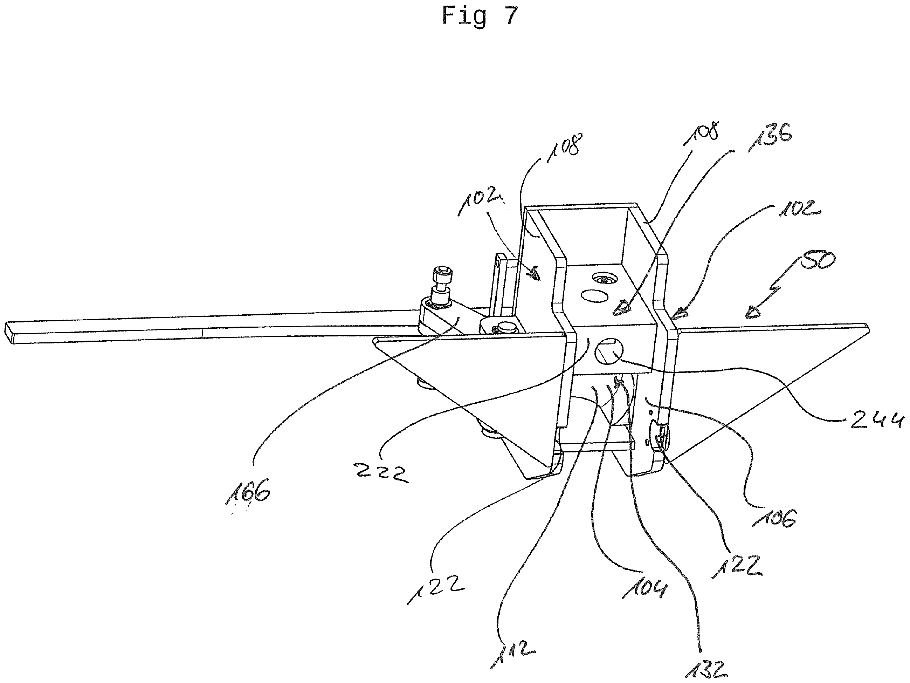

Die Montageeinheit 50 weist ihrerseits ein Gehäuse 102 mit einer Kupplungskugelaufnahme 104 für die Kupplungskugel 26 auf, wobei die Kupplungskugelaufnahme 104 ausgehend von einer Aufnahmeöffnung 106 des Gehäuse 102 eine in dem Gehäuse 102 liegende Kugelaufnahmefläche 112 umfasst (Fig. 4 bis Fig. 8).

Die Montageeinheit 50 ist außerdem mit Positionierkörperaufnahmen 122 versehen, die so ausgebildet sind, dass sie bei auf die Kupplungskugel 26 aufgesetzter Kupplungskugelaufnahme 104 und an der Kugelaufnahmefläche 112 anliegender Kupplungskugel 26, mit jeweils einem der Positionierkörper 54 so zusammenwirken, dass die Positionierkörper 54 an diesen Positionierkörperaufnahmen 122 mit Bereichen der Positionierflächen 64, 66, insbesondere mit den Positionierflächenbereichen 82, 84 und/oder mit den Führungsflächenbereichen 86, 88 anliegen.

Beispielsweise haben die Positionierkörperaufnahmen 122 nicht ganz parallel sondern geringfügige V-förmig zueinander verlaufende Seitenflächen 124, 126, die auf die Positionierflächenbereiche 82, 84 spielfrei aufsetzbar sind (Fig. 4).

Insbesondere sind die Positionierkörperaufnahmen 122 fest mit dem Gehäuse 102 verbunden wobei im einfachsten Fall sich das Gehäuse 102 mit Seitenwänden 108 seinerseits sich bis zu den Positionierkörperaufnahmen 122 erstreckt und selbst mit diesen Positionierkörperaufnahmen 122 versehen ist.

Zur Fixierung der Kugelaufnahme 104 an der Kupplungskugel 26 ist die Montageeinheit 50, insbesondere das Gehäuse 102, wie insbesondere in den Fig. 4 bis 9 zu erkennen, mit einer Haltevorrichtung 130, umfassend insbesondere zwei Halteelementen 132, 134 sowie einer Halteeinheit 136 versehen, wobei das Halteelement 132 stationär an dem Gehäuse 102 gehalten ist und die Kugelaufnahmefläche 112 trägt.

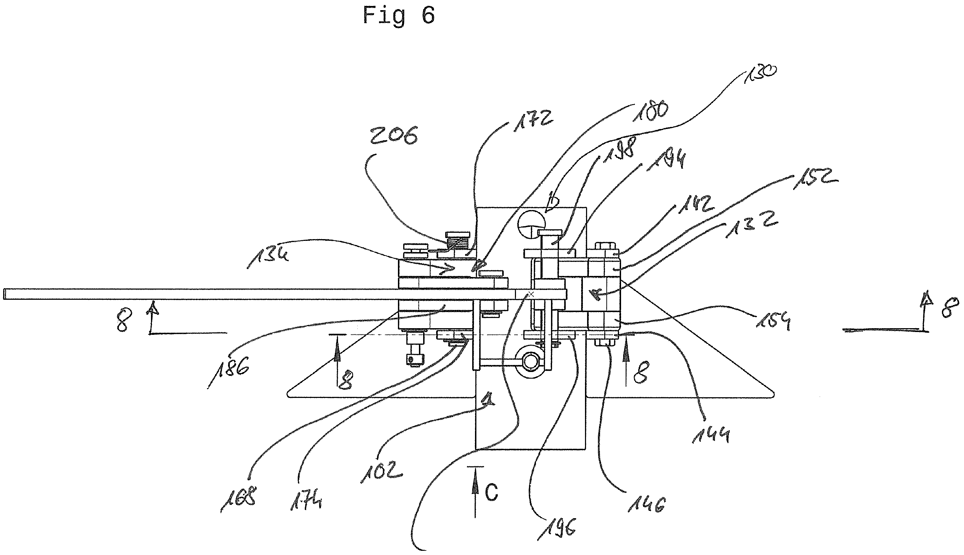

Beispielsweise ist das Halteelement 132 zwischen zwei an dem Gehäuse 102 angeordneten Flanschen 142, 144 (Fig. 6) angeordnet und insbesondere durch Bolzen 146, 148 mit diesen verbunden, wobei die Bolzen 146, 148 sowohl die Flansche 142 und 144 als auch an dem Halteelement 132 vorgesehene Rippen 152, 154 des ersten Halteelements 132 durchsetzen und dadurch dieses relativ zum Gehäuse 102 fixieren (Fig. 6 bis 9).

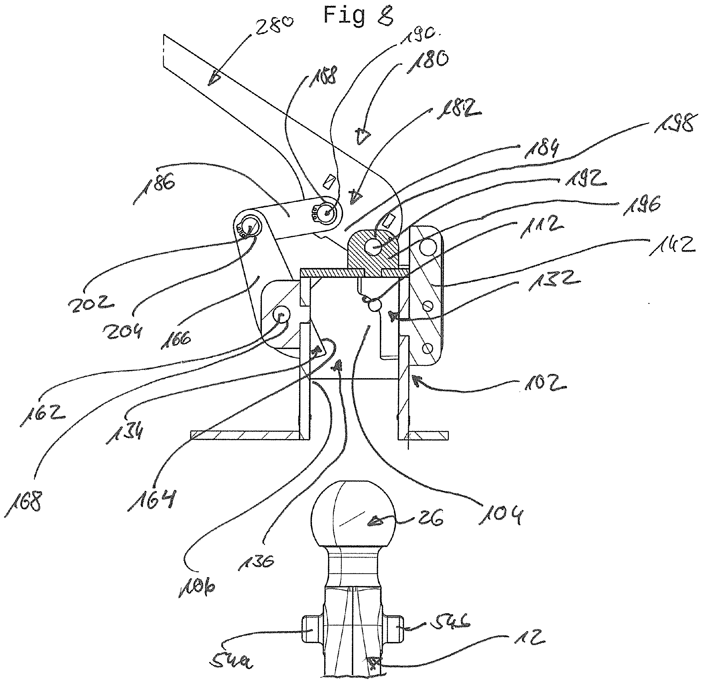

Wie insbesondere in Fig. 8 dargestellt, ist das erste Halteelement 132 ferner so in dem Gehäuse 102 angeordnet, dass dessen Kugelaufnahmefläche 112 im Wesentlichen auf einer Seite der Kupplungskugel 26 anlegbar ist, wobei die Kugelaufnahmefläche 112 insbesondere die Form eines halbseitigen Kugelkappenbereichs zur Aufnahme der Kupplungskugel 26 aufweist, so dass die Kugelaufnahmefläche 112 in der Lage ist, die Kupplungskugel 26 so aufzunehmen, dass sie durch die Kugelaufnahmefläche 112 gegen translatorische Bewegungen in alle in der Kugelaufnahmefläche 112 liegenden Richtungen fixierbar ist.

Das zweite Halteelement 134 ist, wie ebenfalls in den Fig. 6 bis 9 dargestellt, an dem Gehäuse 102 um eine Schwenkachse 162 verschwenkbar gelagert, wobei eine Kugelaufnahmefläche 164 auf einer Seite der Schwenkachse 162 liegt, während sich auf einer der Kugelaufnahmefläche 164 gegenüberliegenden Seite der Schwenkachse 162 ein an dem zweiten Halteelement 134 angeordneter gabelartig ausgebildeter Betätigungsarm 166 von der Schwenkachse 162 weg erstreckt.

Insbesondere wird die Schwenkachse 162 gebildet durch einen Lagerbolzen 168, welcher zwei an dem Gehäuse 102 angeformte Flansche 172, 174 und außerdem das Halteelement 134 selbst durchsetzt (Fig. 6 bis 9).

Durch Verschwenken des zweiten Halteelements 134 um die Schwenkachse 162 ist die Kugelaufnahmefläche 164 desselben auf die Kugelaufnahmefläche 112 des ersten Halteelements 132 zu oder von dieser weg bewegbar, um einerseits die Kupplungskugel 26 - wie nachfolgend im Detail beschrieben - zwischen den Kugelaufnahmeflächen 112 und 164 aufnehmen oder - wie ebenfalls nachfolgend im Detail beschrieben - freigeben zu können.

Das Verschwenken des zweiten Halteelements 134 erfolgt durch eine als Ganzes mit 180 bezeichnete Positioniervorrichtung, umfassend einen mit 182 bezeichneten Kniehebelmechanismus, welcher einen ersten Kniehebelarm 184 und einen zweiten Kniehebelarm 186 umfasst, die durch ein Gelenk 188 miteinander verbunden sind.

Ferner ist der erste Kniehebelarm 184 im Abstand von dem Gelenk 188 um eine erste Hebelachse 192 schwenkbar an dem ersten Halteelement 132 sowie zwei an dem Gehäuse 102 angeordneten Flanschen 194 und 196 gelagert, wobei die erste Hebelachse 192 durch einen Lagerbolzen 198 gebildet ist, welcher die Flansche 194 und 196 sowie die Rippen 152 und 154 des ersten Halteelements 132 und außerdem noch den ersten Hebelarm 184 durchsetzt. Ferner ist der zweite Kniehebelarm 186 im Abstand von dem Gelenk 188 mittels einer zweiten Hebelachse 202 mit dem Betätigungsarm 166 und somit auch mit dem zweiten Halteelement 134 verbunden, wobei die zweite Hebelachse 202 durch einen Lagerzapfen 204 gebildet ist, welcher sowohl Endbereiche des gabelartig ausgebildeten Betätigungsarms 166 als auch den zweiten Kniehebelarm 186 durchsetzt.

Durch Variation des Winkels zwischen dem ersten Kniehebelarm 184 und dem zweiten Kniehebelarm 186 im Bereich des Gelenks 188 besteht somit die Möglichkeit, die Kugelaufnahmefläche 164 in Richtung auf die Kugelaufnahmefläche 112 zu oder von dieser weg zu bewegen, um einerseits die Kupplungskugel 26 aufzunehmen, und insbesondere zu fixieren oder gegebenenfalls freizugeben.

Zur Beaufschlagung des Kniehebelmechanismus 182 dergestalt, dass dieser zwischen den Hebelachsen 192 und 202 in eine abgeknickte Stellung übergeht, ist dieser mit einem Federelement 206 versehen, welches die Tendenz hat einerseits, die Lagerzapfen 198 und 204 so weit in Richtung aufeinanderzu zu beaufschlagen, dass eine Bereitschaftsstellung erreicht wird und somit stets in Richtung einer abgeknickten Stellung des Kniehebelmechanismus 182 wirksam ist, und andererseits ein Auseinanderbewegen der Kugelaufnahmefläche 164 und der Kugelaufnahmefläche 112 beim Ansetzen der Montageeinheit 50 auf den Kugelhals 12 mit der Kupplungskugel 26 zuzulassen.

Mit der Positioniervorrichtung 180 sind die Halteelemente 132 und 134 relativ zueinander wie folgt bewegbar und positionierbar.

Wie in Fig. 8, 9 und 10 dargestellt, ermöglicht die Positioniervorrichtung 180 bei Einwirkung des Federelements 206 die Halteelemente 132 und 134 in die Bereitschaftsstellung zu bringen, in welcher die Halteelemente 132 und 134 in einem ausreichend großen Abstand zueinander stehen, der ein Aufsetzen der Kupplungskugelaufnahme 104 auf die Kupplungskugel 26 bei einem damit verbundenen Auseinanderbewegen der Halteelemente 132 und 134 ermöglicht.

Die Bereitschaftsstellung wird dadurch definiert, dass der Kniehebelmechanismus 182 in einer Stellung gehalten wird, die nicht der gestreckten Stellung des Kniehebelmechanismus 182 entspricht, sondern einer Stellung, in welcher Verbindungslinien zwischen der ersten Hebelachse 192 und dem Gelenk 188 sowie der zweiten Hebelachse 202 und dem Gelenk 188 einen Winkel kleiner 180° aufweisen.

In dieser Stellung steht auch das zweite Halteelement 134 in einem ausreichend großen Abstand vom ersten Halteelement 132, der beim Aufsetzen der Kupplungskugelaufnahme 104 auf die Kupplungskugel 26 ein Auseinanderbewegen der Halteelemente 132 und 134 dadurch, dass die Halteelemente 132 und 134 auf gegenüberliegenden Seiten der Kupplungskugel 26 an der Kupplungskugel 26 über diese hinweg bewegt werden können und dies auch nicht behindern.

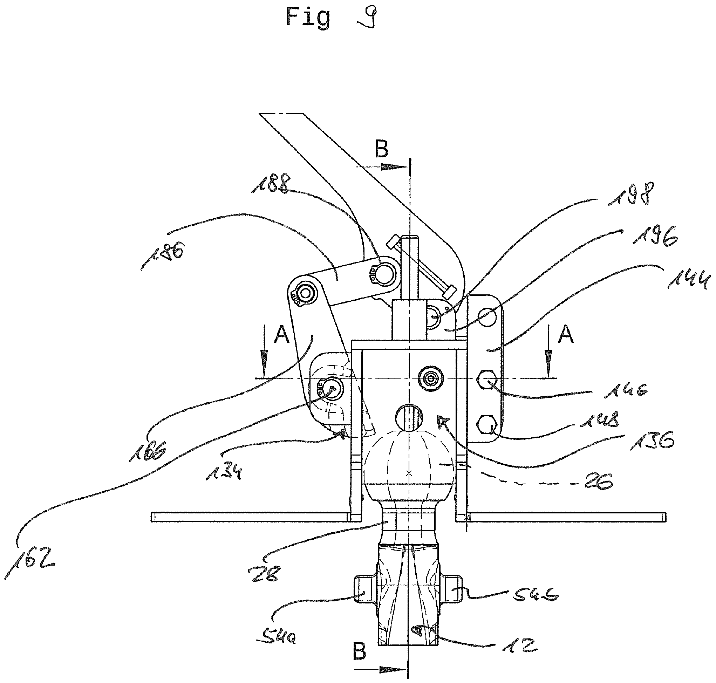

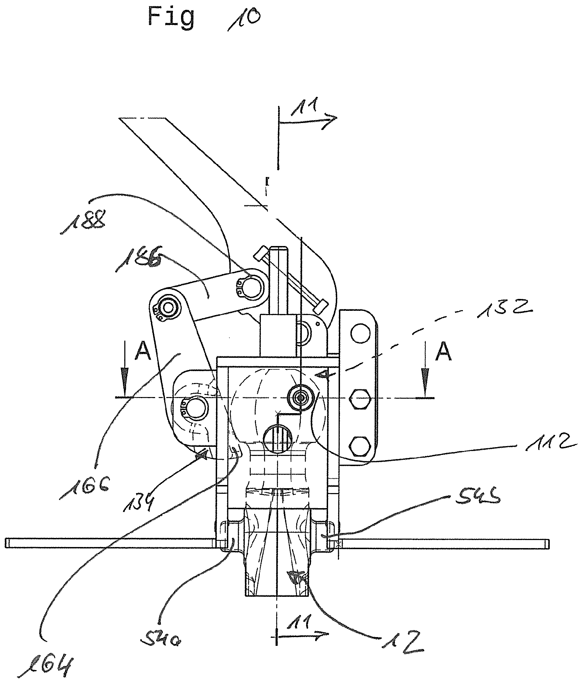

Wird nun in dieser von der Positioniervorrichtung 180 vorgegebenen Bereitschaftsstellung der Halteelemente 132 und 134 die Kupplungskugelaufnahme 104 auf die Kupplungskugel 26 aufgesetzt, so liegt, wie in den Fig. 9 und 10 dargestellt, die Kupplungskugel 26 einerseits an dem ersten Halteelement 132 an und bewegt das zweite Halteelement 134, das an der gegenüberliegenden Seite der Kupplungskugel 26 anliegt, in Richtung von dem ersten Halteelement 132 weg bis die Kupplungskugel 26 an der Kugelaufnahmefläche 112 anliegt, wie in Fig. 10 dargestellt, so dass dann die Halteelemente 132, 134 wieder in der Bereitschaftsstellung stehen.

Um nun die Kupplungskugelaufnahme 104 der Montageeinheit 50 in dieser auf die Kupplungskugel 26 aufgesetzten Stellung gegen ein Abheben von der Kupplungskugel 26 zu sichern, ist die bislang nicht im Detail beschriebene Halteeinheit 136 vorgesehen.

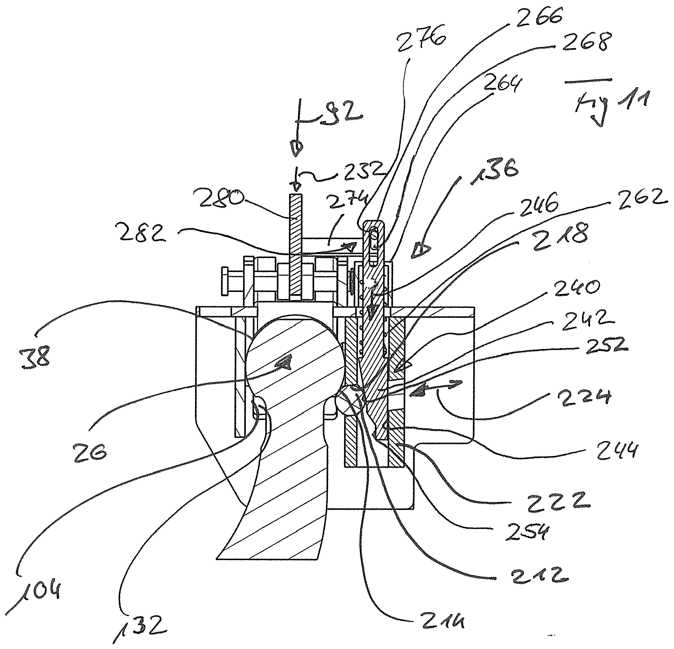

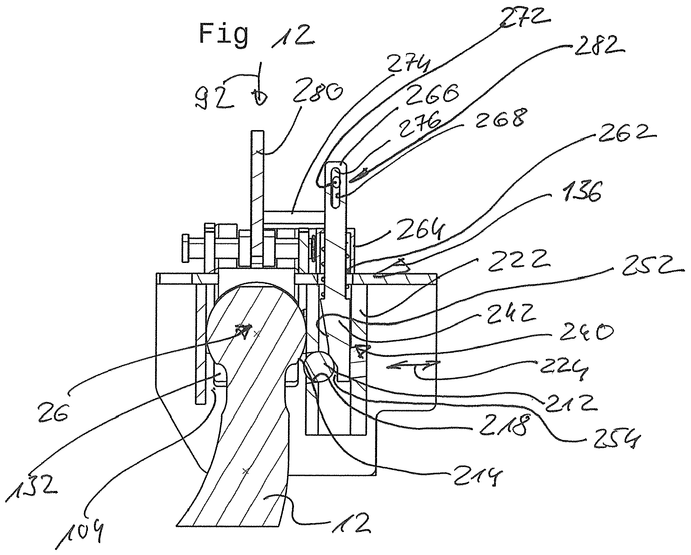

Die Halteeinheit 136 umfasst, wie in Fig. 11 und 12 dargestellt, ein drittes Halteelement 212, welches zur Sicherung der Kupplungskugelaufnahme 104 und somit auch der Montageeinheit 50 gegen ein Abheben vom der Kupplungskugel 26 auf die Kupplungskugel 26 einwirkt, und zwar auf einen Kugelflächenbereich 214 der Kugelfläche 38, der zwischen der Äquatorebene AQ der Kupplungskugel 26, die durch den Kugelmittelpunkt 36 und senkrecht zur Mittelachse 22 verläuft, und dem Kugelansatz 28 liegt.

Das beispielsweise als Kugel ausgebildetes drittes Halteelement 212 ist in einem Führungskanal 218 eines die Kupplungskugelaufnahme 104 begrenzenden Wandkörpers 222 angeordnet und verläuft quer zu einer Aufsetzrichtung 92 der Kugelaufnahme 104, so dass das dritte Halteelement 212 in einer quer zur Aufsetzrichtung 92 verlaufenden Querrichtung 224 und somit auch quer zur Kupplungskugelaufnahme 104 zwischen einer in Fig. 11 dargestellten Sicherungsstellung, in welcher das dritte Halteelement 212 an der in der Kupplungskugelaufnahme 104 aufgenommenen Kupplungskugel 26 anliegt und einer in Fig. 12 dargestellten Freigabestellung, in welcher das dritte Halteelement 212 nicht in die Kupplungskugelaufnahme 104 hineinragt, bewegbar ist.

Damit lässt sich das dritte Halteelement 212 in dem Führungskanal 218 so weit in Richtung der Kupplungskugel 26 bewegen, dass dieses auf den Kugelflächenbereich 214 wirkt und dadurch die Kupplungskugel 26 in diesem Kugelflächenbereich 214 beaufschlagt, um die Kupplungskugelaufnahme 104 und somit auch die Montageeinheit 50 gegen ein Abheben von der Kupplungskugel 26 zu sichern, oder die Kupplungskugel 26 in der Freigabestellung freigibt. Aufgrund der Wölbung des Kugelflächenbereichs 214, der zwischen der Äquatorebene AQ und dem Kugelansatz liegt, führt eine Beaufschlagung der Kupplungskugel 26 durch das dritte Halteelement 212 dazu, dass die Kupplungskugelaufnahme 104 eine parallel zur Aufsetzrichtung 92 wirkende Aufsetzkraft 232 erfährt, und somit die Kupplungskugelaufnahme 104 mit der Kugelaufnahmefläche 112 gegen die Kupplungskugel 26 drückt und dabei gegen ein Abheben von der Kupplungskugel 26 sichert.

Dabei ist die Aufsetzkraft 132 nicht groß genug, um eine kraftschlüssige Verbindung zwischen der Kugelfläche 38 und der an dieser anliegenden Kugelaufnahmefläche 112 herzustellen, die die Kupplungskugelaufnahme 104 und somit die Montageeinheit 50 gegen ein Verkippen relativ zur Kupplungskugel sichert, sondern lediglich so groß, dass die Kupplungskugelaufnahmefläche 112 in Anlage an der Kugelfläche 38 gehalten wird.

Darüber hinaus stellt jedoch das dritte Halteelement 212 dann, wenn dieses an dem Kugelflächenbereich 214 anliegt, eine formschlüssige Sicherung der Kupplungskugelaufnahme 104 und somit der Montageeinheit 50 gegen ein Abheben von der Kupplungskugel 26 dar, so dass durch die Halteeinheit 136 die Möglichkeit besteht - wie bereits dargelegt - die Kupplungskugelaufnahme 104 und somit die Montageeinheit 50 gegen ein Abheben von der Kupplungskugel 26 zu sichern.

Zur Beaufschlagung des dritten Halteelements 212 ist eine Aktivierungseinrichtung 240 vorgesehen, welche einen Keilkörper 242 aufweist, der in einer Keilkörperführung 244, die quer, vorzugsweise senkrecht zur Querrichtung 224 in dem Wandkörper 222 in einer Aktivierungsrichtung 246 bewegbar geführt ist und eine Keilfläche 252 aufweist, die auf das dritte Halteelement 212 in der Sicherungsstellung wirkt und dieses in Anlage an dem Kugelflächenbereich 214 hält, wobei die Keilfläche 252 in eine Rückzugsfläche 254 ausläuft, welche gegenüber der Keilfläche 252 soweit zurückgesetzt ist, dass bei einem Verschieben des Keilkörpers 242 entgegengesetzt zur Betätigungsrichtung 246 dazu die Möglichkeit eröffnet, den Keilkörper 242 selbst in eine Freigabestellung, dargestellt in Fig. 12, zu bewegen, in welcher die Rückzugsfläche 254 eine derartige Bewegung des dritten Halteelements 212 in der Querrichtung 224 erlaubt, dass das dritte Halteelement 212 sich in dem Führungskanal 218 so weit von der Kupplungskugel 26 weg bewegen und in eine eigene Freigabestellung kommen kann, die es erlaubt, die Kupplungskugelaufnahme 104 und somit die Montageeinheit 50 ohne Blockade durch das dritte Halteelement 212 von der Kupplungskugel 26 abzuheben, um die Montageeinheit 50 von dem Kugelhals 12 und der Kupplungskugel 26 zu lösen.

Die Keilkörperführung 244 ist im einfachsten Fall als Führungskanal in dem Wandkörper 222 ausgebildet, der sich beispielsweise parallel zur Kupplungskugelaufnahme 104 erstreckt, so dass der Keilkörper 242 in der Aktivierungsrichtung 246 ungefähr parallel zur Kupplungskugelaufnahme 104 und somit auch ungefähr parallel zur Aufsetzrichtung 92 zwischen seiner das dritte Halteelement 212 in Richtung der Kupplungskugel 26 beaufschlagenden Sicherungsstellung und seiner die Bewegung des dritten Halteelements 212 in die die Kupplungskugel in der Kupplungskugelaufnahme 104 freigebenden Freigabestellung bewegbar ist.

Um den Keilkörper 242 in Richtung der Sicherungsstellung zu beaufschlagen, ist ein federelastisches Element 262 vorgesehen, das ständig auf den Keilkörper 242 in der Aktivierungsrichtung 246 einwirkt und somit diesen in Richtung seiner Sicherungsstellung beaufschlagt.

Das federelastische Element 262 stützt sich einerseits am Keilkörper 242 und andererseits an einer Stützhülse 264 ab, welche mit dem Wandkörper 222 verbunden ist.

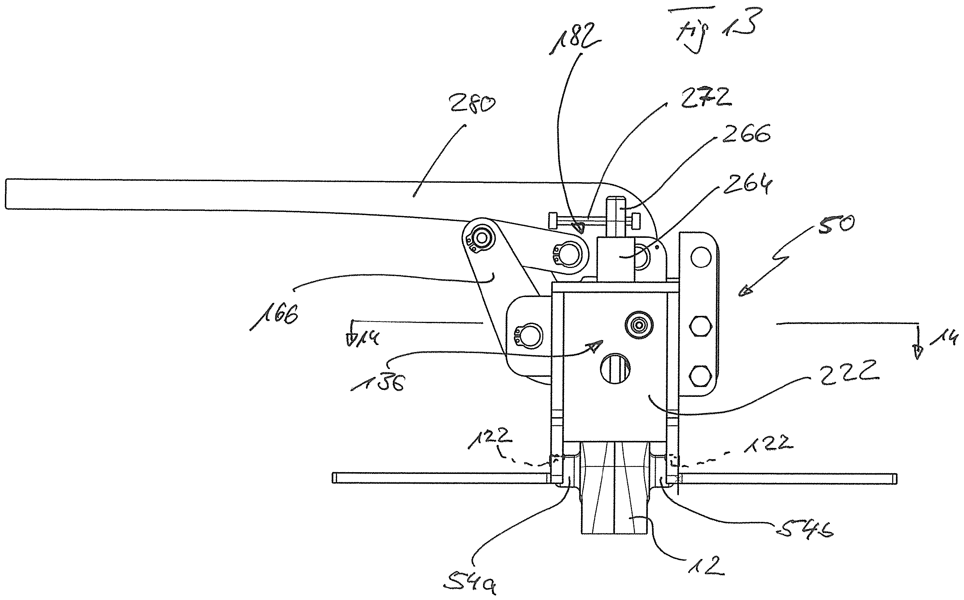

Der Keilkörper 242 und die Keilkörperführung 244 sowie das federelastische Element 262 bilden somit zusammen ein federbeaufschlagtes Keilgetriebe 260. Um den Keilkörper 242 gegen die Wirkung des federelastischen Elements 262 in die Freigabestellung bewegen zu können, ist der Keilkörper 242 mit einer über die Keilkörperführung 244 und insbesondere auch über die Stützhülse 264 überstehenden Einwirkungsabschnitt 266 versehen, welcher beispielsweise eine Aufnahme 268 für ein in Fig. 13 dargestelltes Einwirkungselement 272, welches beispielsweise in die Aufnahme 268 eingreift.

Das Einwirkungselement 272 ist dabei vorzugsweise über einen Verbindungsarm 274 mit einem Betätigungselement 280 des Kniehebelmechanismus 182 gekoppelt, wobei ein Verschwenken des Betätigungselements 280 in eine Freigabestellung des Kniehebelmechanismus 182, in welcher das zweite Halteelement 134 den maximalen Abstand von dem ersten Halteelement 132 aufweist und somit die Kupplungskugel 26 dadurch frei aus der Kupplungskugelaufnahme 104 heraus bewegbar ist, auch dazu führt, dass die Aktivierungseinrichtung 240 in der Freigabestellung steht, das heißt insbesondere der Keilkörper 242 der Aktivierungsrichtung 246 so verschoben ist, dass das dritte Halteelement 212 an der Rückzugsfläche 254 zur Anlage kommen kann. Dabei wirkt das Betätigungselement 280 der Wirkung des federelastischen Elements 262 entgegen.

Die Aufnahme 268 und das Einwirkungselement 272 sind so ausgebildet, dass sie eine Freigangkupplung 282 des Betätigungselements 280 und die Funktionen der Aktivierungseinrichtung, insbesondere des Keilgetriebes 260 mit Freigang koppelt, und zwar so, dass ein Bewegen des Betätigungselements 280 zur Überführung des Kniehebelmechanismus 182 von der Bereitschaftsstellung der Halteelemente 132, 134 in die Freigabestellung der Halteelemente 132, 134 auch ein Überführen der Aktivierungseinrichtung 240 von der Sicherungsstellung in die Freigabestellung zur Folge hat, dass aber ein Überführen des Kniehebelmechanismus 182 von der Freigabestellung der Halteelemente 132, 134 in die Bereitschaftsstellung der Halteelemente 132, 134 oder die Spannstellung der Halteelemente 132, 134 sich nicht auf die Aktivierungseinrichtung 240 auswirkt, so dass die Aktivierungseinrichtung 240 selbsttätige von der Freigabestellung in die Sicherungsstellung übergehen kann.

Dies wird insbesondere dadurch erreicht, dass die Aufnahme 268 in Richtung parallel zur Aktivierungsrichtung 246 eine ausreichend große Ausdehnung aufweist, so dass Einwirkungselement 272 lediglich zum Bewegen des Keilkörpers 242 von der Sicherungsstellung in die Freigabestellung mit einer Endfläche 276 der Aufnahme zusammenwirkt, nicht jedoch beim Bewegen des Betätigungselements 280 und des Kniehebelmechanismus von der Freigabestellung in die Bereitschaftsstellung oder die Spannstellung.

Somit wird durch das Betätigungselement 280 die Möglichkeit eröffnet, sowohl die zwei Halteelemente 132 und 134 in ihre die Kupplungskugel 26 vollständig freigebende Freigabestellung zu bewegen und gleichzeitig auch die Halteeinheit 136 in ihre Freigabestellung zu bewegen, so dass ein ungehindertes Abheben der Kupplungskugelaufnahme 104 und somit auch der Montageeinheit 50 von der Kupplungskugel 26 möglich ist.

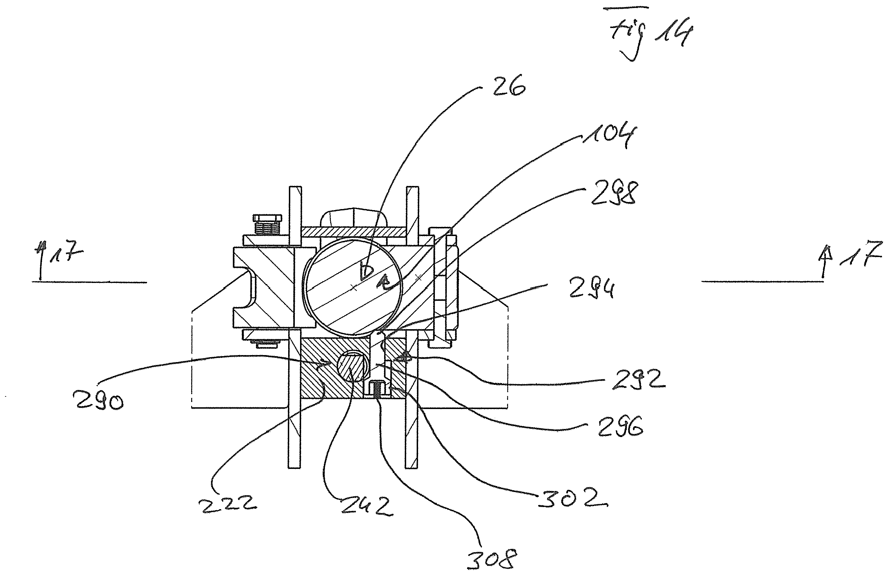

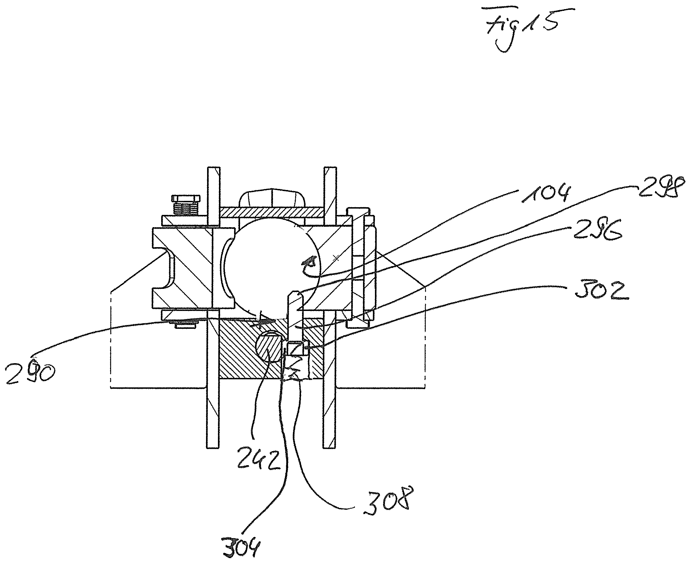

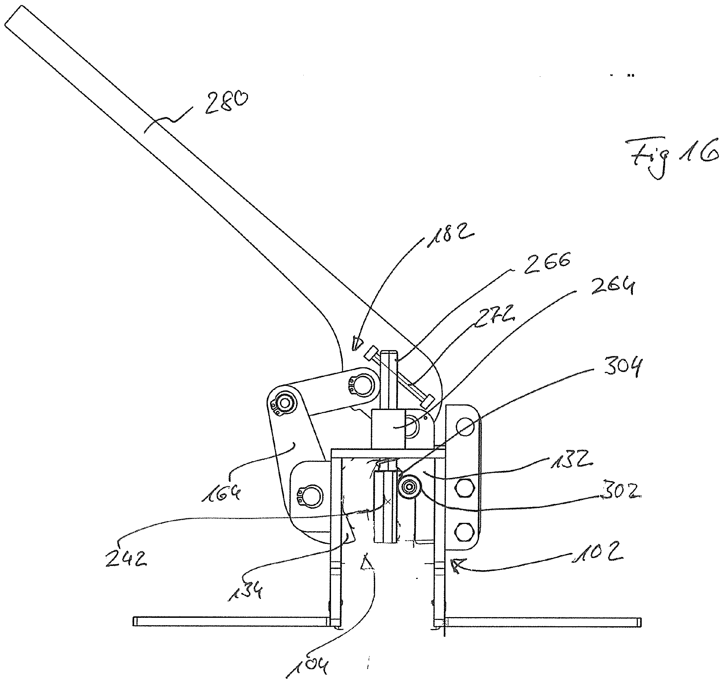

Um zu verhindern, dass beim Abheben der Montageeinheit 50 und keiner weiteren Einwirkung auf den Keilkörper 242 entgegengesetzt zur Aktivierungsrichtung 262 der Keilkörper 242 von der Freigabestellung wieder in die Sicherungsstellung übergeht und das dritte Halteelement 212 in die Sicherungsstellung bewegt, obwohl die Kupplungskugel 26 nicht in die Kupplungskugelaufnahme 104 eingreift, ist eine in Fig. 14 und 15 dargestellte Freigabestellungssicherung 290 vorgesehen, welche einen in dem Wandkörper 222 in einer Schieberführung 294 geführten Sicherungsschieber 296 aufweist, der als Tastelement eine Schiebernase 298 aufweist, welche, wie in Fig. 15 dargestellt, bei nicht in die Kupplungskugelaufnahme 104 eingreifender Kupplungskugel 26 in die Kupplungskugelaufnahme 104 hineinragt und wie in Fig. 15 und 16 dargestellt in der Lage ist, mit einem Sicherungsabschnitt 302 eine Haltenase 304 des Keilkörpers 242 zu hintergreifen und somit den Keilkörper 242 in seiner Freigabestellung zu blockieren.

Erfolgt dagegen eine Einführung der Kupplungskugel 26 in die Kupplungskugelaufnahme 104, so wirkt, wie in Fig. 14 dargestellt, die Kupplungskugel 26 mit der Kugelfläche 38 auf die Schiebernase 298 und verschiebt den Sicherungsschieber 296 aus der Kupplungskugelaufnahme 104 heraus, wobei gleichzeitig erreicht wird, dass der Sicherungsabschnitt 302 des Sicherungsschiebers 296 die Haltenase 304 freigibt und somit eine Bewegung des Keilkörpers 242 in Richtung der Aktivierungsrichtung 246 zulässt, so dass der Keilkörper 242 in der Lage ist, das dritte Halteelement 212 von der Freigabestellung in die Sicherungsstellung zu bewegen.

Dies hat zur Folge, dass bei einer Einwirkung auf das Betätigungselement 280 in der Weise, dass ein Bewegen der Aktivierungseinrichtung 240 mit dem Keilkörper 242 in die Freigabestellung erfolgt und gleichzeitig ein Abheben der Kupplungskugelaufnahme 104 von der Kupplungskugel 26 erfolgt, dies dazu führt, dass der Sicherungsschieber 296 unter Einwirkung des auf diesen Einwirkenden federelastischen Elements 308 in die in Fig. 15 dargestellte, in die Kupplungskugelaufnahme 104 eingreifende Stellung übergeht und somit den Keilkörper 242 in der Freigabestellung hält, unabhängig davon, ob ein weiteres Einwirken auf das Betätigungselement 280 erfolgt oder nicht.

Erst bei einem Wiederaufsetzen der Kupplungskugelaufnahme 104 und somit der Montageeinheit 50 auf die Kupplungskugel 26 besteht die Möglichkeit mit der Kugelfläche 38 der Kupplungskugel 26, auf den Sicherungsschieber 296 einzuwirken und diesen entgegen der Kraft des federelastischen Elements 308 in seine Freigabestellung zu überführen, in welcher der Keilkörper 242 der Betätigungseinrichtung 240 in der Lage ist, wiederum auf das dritte Halteelement 212 einzuwirken, und dieses sich von der Freigabestellung in die Sicherungsstellung dann bewegen kann, wenn die Kupplungskugel 26 in der Kupplungskugelaufnahme 104 an der Kugelaufnahmefläche 112 anliegt, so dass dann die Halteeinheit 136 wiederum in die Haltestellung übergeht.

Ist dabei der Kugelhals 12 mit den Positionierkörpern 54a und 54b versehen, so greifen diese in der Haltestellung in die Positionierkörperaufnahmen 122 des Gehäuses 102 ein, und folglich ist bereits in der Haltestellung der Haltevorrichtung 130 unabhängig von der Position der Halteelemente 132 und 134 ausschließlich aufgrund der Wirkung der Halteeinheit 136 die Montageeinheit 50 in ihrer Position relativ zu der Kupplungskugel 26 durch die Wirkung der Halteeinheit 136 gesichert und somit unlösbar von der Kupplungskugel 26 mit dem Kugelhals 12 verbunden. Außerdem ist aufgrund des Zusammenwirkens der Positionierkörper 54a und 54b und mit den Positionierkörperaufnahmen 122 des Gehäuses 102 relativ zur Kupplungskugel 26 kippsicher nach allen Richtungen mit dem Kugelhals 12 verbunden.

Insbesondere ist in der Haltestellung aufgrund des Zusammenwirkens der Positionierkörper 54a und 54b mit den Positionierkörperaufnahmen 122 sichergestellt, dass die Montageeinheit 50 relativ zur Kupplungskugel 26 weder um horizontale Achsen kippbar noch um vertikale Achsen drehbar ist, da diese Bewegungen durch die in den Positionierkörperaufnahmen 122 angeordneten, vorzugsweise mit den Führungsflächen 86, 88 mit den Positionierkörperaufnahmen 122 wirkenden Positionierkörpern 54a, 54b am Kugelhals unterbunden ist.

Damit besteht bei Vorhandensein der Positionierkörper 54a und 54b keine Notwendigkeit einer weiteren Einwirkung auf das Betätigungselement 280.

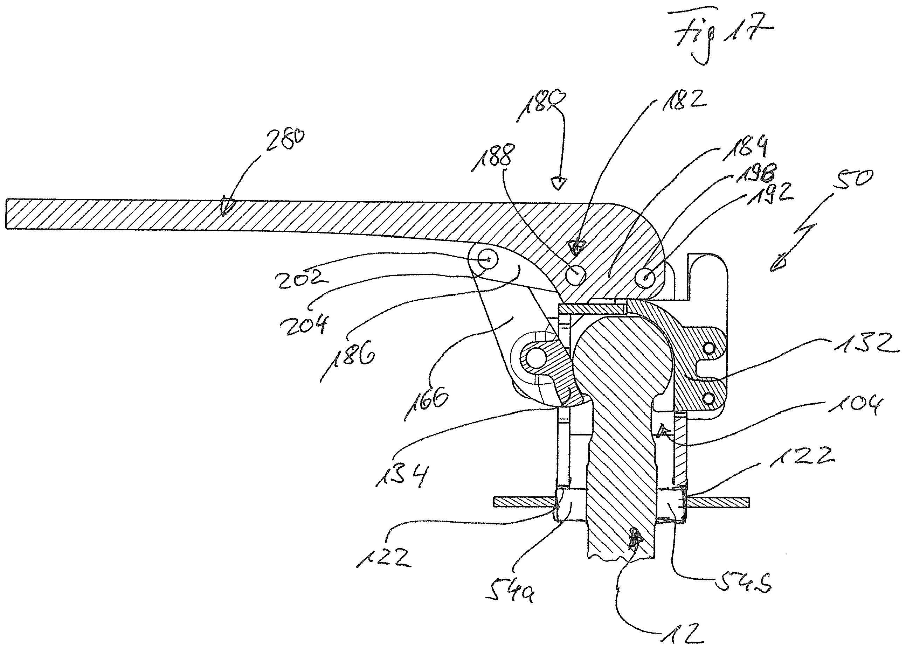

Es ist jedoch möglich, das Betätigungselement 280 in eine in Fig. 17 dargestellte Spannstellung zu bewegen, in welcher die Halteelemente 132 und 134 aufgrund des Kniehebelmechanismus 182 in seiner Übertotpunktstellung in einer Spannstellung stehen, in welcher die Halteelemente 132 und 134 kraftschlüssig auf die Kugelfläche 38 der Kupplungskugel einwirken und somit eine zusätzliche Sicherung bewirken.

Durch Bewegen des Kniehebelmechanismus in die Übertotpunktstellung, weist die zweite Hebelachse 202 im Wesentlichen einen maximalen Abstand von der ersten Hebelachse 192 auf und außerdem die von der ersten Hebelachse 192 über die Gelenkachse 190 des Gelenks 188 des Kniehebelarms 186 bis zur zweiten Hebelachse 202 in entgegengesetzter Richtung geknickt ist als in der Bereitschaftsstell ung.

Somit erlaubt die Haltevorrichtung 130 in der Spannstellung der Halteelemente 132 und 134 noch eine zusätzliche ergänzende Absicherung der Fixierung der Montageeinheit 50 mit der Kupplungskugelaufnahme 104 an dem Kugelhals 12, wie in Fig. 17 dargestellt.

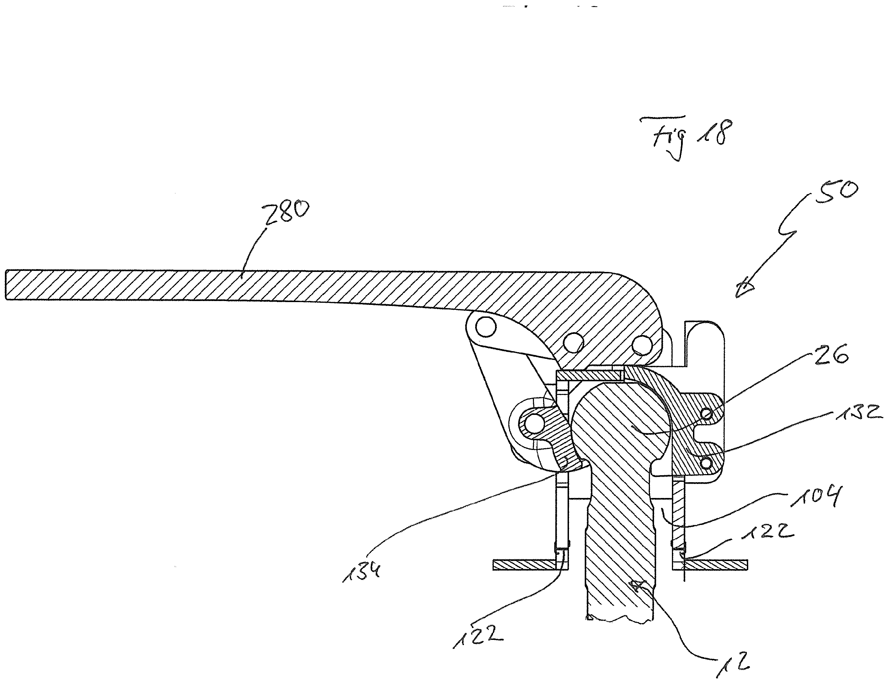

Bei der erfindungsgemäßen Lösung besteht jedoch, wie in Fig. 18 dargestellt, auch die Möglichkeit, die Montageeinheit 50 mit der Kupplungskugelaufnahme 104 an einem Kugelhals 12' mit einer Kupplungskugel 26, jedoch ohne die Positionierkörper 54a und 54b zu montieren, wobei in diesem Fall die Positionierkörper 122 nicht mit Positionierkörpern 54 wechselwirken können, sondern die Haltevorrichtung 130 einerseits durch die Halteeinheit 136 ein Abheben der Montageeinheit 50 mit der Kupplungskugelaufnahme 104 von der Kupplungskugel 26 in der Haltestellung verhindert und zusätzlich die Möglichkeit besteht, durch Bewegen der Halteelemente 132 und 134 in die Spannstellung die Montageeinheit 50 relativ zur Kupplungskugel kraftschlüssig gegen ein Verdrehen um eine vertikale Achse und ein Verkippen um horizontale Achsen zu sichern, so dass der Kraftschluss zwischen den Halteelementen 132 und 134 in der Spannstellung derselben die Kippsicherung der Kupplungskugelaufnahme 104 und somit auch der Montageeinheit 50 relativ zur Kupplungskugel 26 bewirkt.

Somit lässt sich der erfindungsgemäß ausgebildete Lastenträger 40 sowohl bei einem Kugelhals 12 mit den Positionierkörpern 54 als auch bei einem Kugelhals 12' ohne Positionierkörper 54 einsetzen und gegen ein Verdrehen um eine vertikale Achse und ein Verkippen um horizontale Achsen sichern, wobei allerdings bei einem Kugelhals 12 mit Formschlusskörpern 54 eine höhere Stabilität und eine sichere Befestigung erreicht wird.

## Patentansprüche

1. Lastenträger (40) für einen Kugelhals (12) und eine von dem Kugelhals (12) getragene Kupplungskugel (26) aufweisende Anhängekupplungen (10) für Kraftfahrzeuge, umfassend eine Montageeinheit (50), die eine auf die Kupplungskugel (26) aufsetzbare Kupplungskugelaufnahme (104) und eine der Kupplungskugelaufnahme (104) zugeordnete Haltevorrichtung (130) aufweist, welche bei auf die Kupplungskugel (26) aufgesetzter und somit in einer Fixierposition stehender Kupplungskugelaufnahme (104) die Kupplungskugelaufnahme (104) mit der Kupplungskugel (26) verbindet, und mindestens eine mit der Montageeinheit (50) verbundene Positionierkörperaufnahme (122), welche bei auf die Kupplungskugel (26) aufgesetzter Kupplungskugelaufnahme (104) zur kippsicheren und Kippmomente aufnehmenden Abstützung der Montageeinheit (50) an dem Kugelhals (10) mit mindestens einem am Kugelhals (10) fest angeordneten Positionierkörper (54) in Wirkverbindung bringbar ist, **dadurch gekennzeichnet, dass** die Haltevorrichtung (130) in eine Spannstellung überführbar ist, in welcher die Kupplungskugelaufnahme (104) mit der Haltevorrichtung (130) an der Kupplungskugel (26) derart kraftschlüssig festgelegt ist, dass die Montageeinheit (50) den Lastenträger (40) allein durch den Kraftschluss an der Kupplungskugel (26) kippfrei fixiert.

2. Lastenträger nach Anspruch 1, **dadurch gekennzeichnet, dass** die Haltevorrichtung (130) so ausgebildet ist, dass diese beim Aufsetzen der Kupplungskugelaufnahme (104) auf die Kupplungskugel (26) selbsttätig in eine Haltestellung übergeht, in welcher die Kupplungskugelaufnahme (104) unlösbar, jedoch verkippbar mit der Kupplungskugel (26) verbunden ist.

3. Lastenträger nach Anspruch 1 oder 2, **dadurch gekennzeichnet, dass** die Haltevorrichtung (130) mindestens ein erstes Halteelement (132) und ein zweites Halteelement (134) umfasst, und dass die Halteelemente (132, 134) beim Aufsetzen der Kupplungskugelaufnahme (104) auf die Kupplungskugel (26) die Kupplungskugel (26) zwischen sich aufnehmen und sich dabei an der Kupplungskugel (26) anlegen, dass insbesondere die Halteelemente (132, 134) in einer Spannstellung der Haltevorrichtung (130) die Kupplungskugel (26) zwischen sich aufnehmen und zwischen sich kraftschlüssig einspannen, dass insbesondere die Halteelemente (132, 134) in der Haltestellung der Haltevorrichtung (130) die Kupplungskugel (26) zwischen sich aufnehmen und auf dieser gleitend anliegen.

4. Lastenträger nach einem der voranstehenden Ansprüche, **dadurch gekennzeichnet, dass** die Haltevorrichtung (130) eine mit den Halteelementen (132, 134) zusammenwirkende Positioniervorrichtung (180) aufweist, mittels welcher die Halteelemente (132, 134) in der jeweiligen Stellung relativ zueinander positionierbar und fixierbar sind.

5. Lastenträger nach einem der Ansprüche 3 oder 4, **dadurch gekennzeichnet, dass** die Positioniervorrichtung (180) so ausgebildet ist, dass die Halteelemente (132, 134) mit dieser vor dem Aufsetzen der Kupplungskugelaufnahme (104) in einer Bereitschaftsstellung positionierbar sind, dass insbesondere durch das Anlegen der Halteelemente (132, 134) an der Kupplungskugel (26) beim Aufsetzen der Kupplungskugelaufnahme (104) auf die Kupplungskugel (26) ein Aufheben der Bereitschaftsstellung erfolgt, dass insbesondere das Aufheben der Bereitschaftsstellung dadurch erfolgt, dass die Halteelemente (132, 134) bei Kontakt mit der Kupplungskugel (26) von einander weg bewegt werden, dass insbesondere mit der Positioniervorrichtung (180) die Halteelemente (132, 134) in die die Kupplungskugel (26) kraftschlüssig festlegende Spannstellung überführbar sind, dass insbesondere die Positioniervorrichtung (180) so ausgebildet ist, dass die Halteelemente (132, 134) von der Bereitschaftsstellung ausgehend in die Spannstellung überführbar sind, dass insbesondere die Positioniervorrichtung (180) so ausgebildet ist, dass die Halteelemente (132, 134) durch manuelle Einwirkung auf ein Betätigungselement (280) der Positioniervorrichtung (180) von der Bereitschaftsstellung ausgehend in die Spannstellung überführt werden.

6. Lastenträger nach einem der Ansprüche 4 oder 5, **dadurch gekennzeichnet, dass** die Positioniervorrichtung (180) zur Bewegung der Halteelemente (132, 134) in die jeweiligen Stellungen relativ zueinander mit einem Kniehebelmechanismus (182) versehen ist, dass insbesondere der Kniehebelmechanismus (182) in einer ersten Knickstellung die Halteelemente (132, 134) in der Bereitschaftsstellung hält, dass insbesondere der Kniehebelmechanismus (182) in eine Übertotpunktstellung bewegbar ist, in welcher dieser die Halteelemente (132, 134) in der Spannstellung hält.

7. Lastenträger nach einem der voranstehenden Ansprüche, **dadurch gekennzeichnet, dass** die Haltevorrichtung (130) eine Halteeinheit (136) aufweist, die in der Haltestellung der Haltevorrichtung (130) die Montageeinheit (50) mittels mindestens eines dritten Halteelements (212) gegen ein Abheben von der Kupplungskugel (26) sichert.

8. Lastenträger nach Anspruch 7, **dadurch gekennzeichnet, dass** die Positioniervorrichtung (180) und die Halteeinheit (136) mit einem gemeinsamen Betätigungselement (280) gekoppelt und durch dieses gemeinsam betätigbar sind, dass insbesondere bei einer Einwirkung auf das Betätigungselement (280) zum Lösen des Lastenträgers (40) von dem Kugelhals (12) die Haltevorrichtung (130) die Halteelemente (132, 134) in eine die Kupplungskugel (26) freigebende Relativposition derselben überführt und dass gleichzeitig die Halteeinheit (136) in ihre Freigabestellung übergeht, dass insbesondere mit dem Betätigungselement (280) die Halteeinheit (136) von einer die Kupplungskugel (26) in der Haltestellung der Haltevorrichtung (130) formschlüssig in der Kupplungskugelaufnahme (104) sichernden Sicherungsstellung in eine die Kupplungskugel (26) zur Bewegung aus oder die Kupplungskugel in die Kupplungskugelaufnahme (104) eingreift.

9. Lastenträger nach einem der Ansprüche 7 oder 8, **dadurch gekennzeichnet, dass** das mindestens eine dritte Halteelement (212) in der Haltestellung an der Kupplungskugel (26) angreift und die Montageeinheit (50) durch Formschluss gegen ein Abheben von der Kupplungskugel (26) sichert, und/oder dass insbesondere das dritte Halteelement (212) in einer Sicherungsstellung an der Kupplungskugel (26) angreift und dass insbesondere das dritte Halteelement (212) in der Sicherungsstellung in die Kupplungskugelaufnahme (104) des Gehäuses (102) hineinragt, und/oder dass insbesondere das dritte Halteelement (212) in einer Führung (218) zwischen der Sicherungsstellung und einer Freigabestellung bewegbar geführt ist und dass insbesondere die Führung (218) quer zur Kupplungskugelaufnahme (104) verläuft.

10. Lastenträger nach einem der Ansprüche 7 bis 9, **dadurch gekennzeichnet, dass** das dritte Halteelement (212) in der Sicherungsstellung durch eine Aktivierungseinrichtung (240) beaufschlagt ist, dass insbesondere die Aktivierungseinrichtung (240) ein Keilgetriebe (260) umfasst, dass insbesondere die Aktivierungseinrichtung (240) mit einem Betätigungselement (280) der Haltevorrichtung (130) gekoppelt ist und dass insbesondere beim Betätigen des Betätigungselements (280) dieses auf die Aktivierungseinrichtung (240) einwirkt und diese von der Sicherungsstellung in die Freigabestellung bewegt.

11. Lastenträger nach einem der Ansprüche 8 bis 10, **dadurch gekennzeichnet, dass** das Betätigungselement (280) mittels einer Freigangkupplung (282) mit der Halteeinheit (136) gekoppelt ist.

12. Lastenträger nach Anspruch 11, **dadurch gekennzeichnet, dass** die Freigangkupplung (282) so ausgebildet ist, dass sie bei einem Einwirken auf das Betätigungselement (280) zum Überführen der ersten und zweiten Halteelemente (132, 134) von der Bereitschaftsstellung in die Freigabestellung auch die Halteeinheit (136) von der Sicherungsstellung in die Freigabestellung überführt, jedoch bei einem Einwirken auf das Betätigungselement (280) zum Überführen der ersten und zweiten Halteelemente (132, 134) in die Bereitschaftsstellung und/oder die Spannstellung nicht auf die Halteeinheit (136) einwirkt.

13. Lastenträger nach einem der Ansprüche 10 bis 12, **dadurch gekennzeichnet, dass** die Aktivierungseinrichtung (240) mit einer Freigabestellungssicherung (290) versehen ist, welche in einer blockierenden Stellung die Aktivierungseinrichtung (240) in der Freigabestellung hält.

14. Lastenträger nach Anspruch 13, **dadurch gekennzeichnet, dass** die Freigabestellungssicherung (290) in ihrer Freigabestellung auf die in der Freigabestellung stehende Aktivierungseinrichtung (240) nicht blockierend einwirkt, dass insbesondere die Freigabestellungssicherung (290) mit einem Tastelement (298) versehen ist, welches die die Aktivierungseinrichtung (240) blockierende Stellung der Freigabestellungssicherung (290) dann aufhebt oder verhindert, wenn der Lastenträger (40) auf den Kugelhals (12) mit der Kupplungskugel (26) aufgesetzt wird oder die Kupplungskugel (26) und der Kugelhals (12) relativ zur Kupplungskugelaufnahme (104) in einer Lastenträgerhaltestellung stehen in welcher die Kupplungskugel in die Kupplungskugelaufnahme 104 eingreift und somit diese durch die Haltestellung der Halteeinheit (136) gesichert wird, dass insbesondere die Freigabestellungssicherung (290) selbsttätig in die Sicherungsstellung übergeht, wenn die Aktivierungseinrichtung (240) durch Betätigen des Betätigungselements (280) in die Freigabestellung übergeht und die Kupplungskugel (26) nicht mehr in der Kupplungskugelaufnahme (104) steht.

15. Lastenträger nach einem der voranstehenden Ansprüche, **dadurch gekennzeichnet, dass** die Montageeinheit (50) zwei Positionierkörperaufnahmen (122) aufweist, die aufeinander gegenüberliegenden Seiten der Kupplungskugelaufnahme (104) angeordnet sind, dass insbesondere die zwei Positionierkörperaufnahmen mit Positionierkörpern (54) zusammen wirken, die auf einander gegenüberliegenden Seiten des Kugelhalses (12) angeordnet sind, dass insbesondere die Positionierkörperaufnahmen (122) so angeordnet sind, dass sie außerhalb der Kupplungskugelaufnahme (104) liegen, dass insbesondere die Positionierkörperaufnahmen (122) so ausgebildet sind, dass sie die Positionierkörper (54) so weit aufnehmen, dass die Positionierkörperaufnahmen (122) auf einander gegenüberliegenden Seiten des jeweiligen Positionierkörpers (54) anliegen und/oder dass insbesondere die Positionierkörperaufnahmen (122) auch an den Positionierkörpern (54) auf deren dem Kugelhals (12) abgewandten Stirnseiten anliegen und/oder dass insbesondere Positionierkörperaufnahmen (122) so ausgebildet sind, dass sie eine umgekehrt U-förmige Kontur aufweisen, mit welcher diese beim Aufsetzen der Montageeinheit (50) auf die Anhängekupplung (10) die Positionierkörper (54) auf einander gegenüberliegenden Seiten übergreifen und dabei an den Positionierflächen (64, 66) der Positionierkörper (54), die quer zu einer Längsmittelebene (30) des Kugelhalses (10) verlaufen, anliegen.
